(19) **Europäisches Patentamt / European Patent Office / Office européen des brevets**

(11) **EP 2 473 867 B1**

(12) **FASCICULE DE BREVET EUROPEEN**

(45) Date de publication et mention de la délivrance du brevet:
**09.10.2013 Bulletin 2013/41**

(21) Numéro de dépôt: **10747057.7**

(22) Date de dépôt: **30.08.2010**

(51) Int Cl.:
*G01S 13/00* *(2006.01)*      *G01S 13/87* *(2006.01)*

(86) Numéro de dépôt international:
**PCT/EP2010/062643**

(87) Numéro de publication internationale:
**WO 2011/026810 (10.03.2011 Gazette 2011/10)**

(54) **TRAITEMENT DE DONNEES MULTI-CIBLES POUR RADARS PASSIFS MULTI-RECEPTEURS EN MODE SFN OU MFN**

MULTI-TARGET-DATENVERARBEITUNG FÜR PASSIVRADAR MIT MEHREREN EMPFÄNGERN IN EINEM SFN- ODER MFN-MODUS

MULTI-TARGET DATA PROCESSING FOR MULTI-RECEIVER PASSIVE RADARS IN AN SFN OR MFN MODE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **01.09.2009 FR 0904144**

(43) Date de publication de la demande:
**11.07.2012 Bulletin 2012/28**

(73) Titulaire: **Thales**
**92200 Neuilly Sur Seine (FR)**

(72) Inventeurs:
- **MILLET, Nicolas**
  **F-91470 Limours (FR)**
- **ALLAM, Sébastien**
  **F-91470 Limours (FR)**
- **KLEIN, Mathieu**
  **F-91470 Limours (FR)**
- **MALHERBE, Thierry**
  **F-91470 Limours (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A1- 2 933 775      US-B1- 6 232 922**

## Description

L'invention concerne le domaine général des radars multistatiques. Elle concerne plus particulièrement le domaine du pistage multi-cibles à partir de systèmes multistatiques passifs.

L'exploitation d'un système radar passif comportant une pluralité d'émetteurs et/ou de récepteurs comporte un certain nombre de difficultés. En effet chaque couple émetteur-récepteur permet de constituer une base bistatique à partir de laquelle il est possible de réaliser, de différentes manières simples et connues, la détection et le pistage bistatiques d'objets évoluant dans l'espace couvert par cette base. Cependant, lorsque l'on souhaite connaître la situation aérienne globale de la zone couverte par le système radar, il est nécessaire d'exploiter de manière conjointe les informations, les pistes, produites par les différentes bases bistatiques constituant le système. Or cette exploitation conjointe se heurte à différents problèmes. Certains problèmes sont liés à la configuration des différents émetteurs (position, fréquence d'émission) pouvant être associés à un même récepteur: pour chaque objet détecté par le récepteur on doit pouvoir déterminer l'émetteur à l'origine du signal réfléchi par cet objet, faute de quoi aucun pistage efficace n'est possible. D'autres problèmes sont liés à l'exploitation conjointe des informations (pistes) produites par des bases bistatiques constituées par des récepteurs différents, chaque base travaillant dans son propre repère de coordonnées relatives.

Il existe de procédés connus permettant, dans le cas de bases bistatiques constituées par un récepteur et plusieurs émetteurs émettant sur des canaux fréquentiels distincts, de déterminer l'émetteur à l'origine de tel ou tel signal reçu par le récepteur. En revanche, il n'existe pas de procédé permettant de réaliser une telle distinction dans le cas d'émetteurs émettant le même signal dans un même canal fréquentiel. Le document D1 décrit un procédé de détection multistatique utilisant les signaux GPS comme signaux d'opportunité. Par ailleurs, il n'existe pas de procédé permettant d'établir une situation aérienne globale en fusionnant les données produites par des bases bistatiques comportant des récepteurs distincts.

Un but de l'invention est de proposer une solution permettant de résoudre de manière simultanée les problèmes des systèmes passifs multistatiques évoqués précédemment.

A cet effet l'invention a pour objet un procédé de traitement de données pour système radar multistatique comportant une pluralité d'émetteurs et de récepteurs chaque récepteur pouvant être associé à un ou plusieurs émetteurs pour former une ou plusieurs bases bistatiques, chaque récepteur produisant à des dates successives des trames successives de plots bistatiques. Selon l'invention, le procédé élaborant et entretenant des pistes cartésiennes multi-récepteurs à partir des plots bistatiques élaborés par les différents récepteurs, il comporte:

- une première étape de traitement durant laquelle il élabore et entretient des pistes cartésiennes mono-récepteur chaque piste mono-récepteur étant constituée à partir de plots formés par un récepteur donné du système radar multistatique;
- une seconde étape de traitement durant laquelle il élabore et entretient des pistes cartésiennes multi-récepteurs chaque piste multi-récepteurs étant issue de la fusion de pistes mono-récepteurs et étant constituée des plots constituant les pistes mono-récepteur fusionnées, avec des plots bistatiques n'ayant pas été utilisés lors de l'étape 21 pour constituer une piste mono-récepteur.

Selon l'invention, chaque piste élaborée est caractérisée par un vecteur d'état, une matrice de covariance associée à ce vecteur et la liste des plots bistatiques ayant contribué à sa formation et à son entretien. Les pistes mono-récepteur et multi-récepteurs ainsi élaborées sont actualisées au fur et à mesure de la production des trames de plots par les différents récepteurs. Les pistes élaborées sont transmises aux moyens de traitement opérant en aval du procédé.

Dans un mode de mise en oeuvre préféré, la première étape de pistage du procédé selon l'invention traite les plots produits par chaque récepteur et applique à ces plots un traitement mettant en oeuvre les modules de traitement suivants:

- un module de prédiction qui détermine l'état prédit de la piste mono-récepteur considérée à la date correspondant à la trame de plots disponible k, l'état prédit étant défini par un vecteur $x_{k|k-1}$ d'état et une matrice de covariance $S_{k|k-1}$ associée à ce vecteur;
- un module d'association identifiant les plots d'une trame de plots bistatiques k donnée pouvant être associés à une piste cartésienne donnée, compte tenu son état prédit $\vec{x}_{k|k-1}$, et être utilisés pour actualiser l'état de la piste cartésienne considérée;
- un module de test de la divergence des pistes mono-récepteur entretenues, la divergence d'une piste caractérisant la vraisemblance de cette piste par rapport aux caractéristiques cinématiques des cibles détectée;
- un module de filtrage réalisant pour chaque piste cartésienne mono-récepteur existante et pour une trame de plots bistatiques k donnée, l'estimation $\vec{x}_{k|k}$ du vecteur d'état réel de chaque piste, cette estimation étant réalisée à partir du vecteur d'état prédit de la piste $x_{k|k-1}$ et des plots bistatiques de la trame k associés à celle-ci;

- un module d'initialisation de pistes cartésiennes mono-récepteur, l'initialisation étant réalisée par association de plots bistatiques n'ayant pas été associés à une piste existante;
- un module de fusion de pistes cartésiennes, réalisant l'élaboration d'une piste cartésienne unique à partir de pistes existantes présentant des similitudes,
- un module de contrôle vérifiant pour chaque piste cartésienne la vraisemblance de l'estimation du vecteur d'état estimé $\vec{x}_{k|k}$ caractérisant la piste.

L'état estimé pour chaque piste $\vec{x}_{k\,k}$ est utilisé par le module de prédiction pour construire le vecteur d'état prédit de la piste $\vec{x}_{k+1|k}$ destiné à être associé aux plots constituant la trame de plots bistatiques suivante k+1.

Dans un autre mode de mise en oeuvre préféré, la deuxième étape de pistage du procédé selon l'invention traite simultanément tous les plots produits par les différents récepteurs constituant le système radar multistatique, ces plots constituant une trame de plots bistatiques multi-récepteurs k. Pour cela elle met en oeuvre les modules de traitement suivants:

- un module de prédiction qui détermine l'état prédit de la piste multi-récepteurs considérée à la date correspondant à la trame de plots disponible k, l'état prédit étant défini par un vecteur $x_{k|k-1}$ d'état et une matrice de covariance $S_{k|k-1}$ associée à ce vecteur;
- un premier module d'association identifiant les pistes mono-récepteur pouvant être associées, pour une trame de plots bistatiques k donnée, à une piste multi-récepteurs donnée, compte tenu de l'état prédit $\vec{x}_{k|k-1}$, les plots associés à ces pistes mono-récepteur pouvant être utilisés pour actualiser l'état de la piste multi-récepteurs considérée;
- un second module d'association identifiant les plots d'une trame de plots bistatiques k donnée qui n'ont pas été associés à des pistes mono-récepteur lors de la première étape du procédé et qui peuvent être associés à une piste cartésienne multi-récepteurs donné, compte tenu son état prédit $x_{k|k-1}$, et être utilisés pour actualiser l'état de la piste considérée;
- un module de test de la divergence des pistes multi-récepteurs entretenues, la divergence d'une piste caractérisant la vraisemblance de cette piste par rapport aux caractéristiques cinématiques des cibles détectée;
- un module de filtrage réalisant pour chaque piste cartésienne multi-récepteurs existante et pour une trame de plots bistatiques multi-récepteurs k donnée, l'estimation $\vec{x}_{k|k}$ du vecteur d'état réel de chaque piste, cette estimation étant réalisée à partir du vecteur d'état prédit de la piste $x_{k|k-1}$ et des plots bistatiques de la trame k associés à celle-ci;
- un module d'initialisation de pistes cartésiennes multi-récepteur, l'initialisation étant réalisée par association de plots bistatiques n'ayant pas été associés à une piste mono-récepteur existante lors de la première étape du procédé et des plots associés à des pistes mono-récepteur lors de la première étape du procédé, ces pistes mono-récepteur n'étant associées à aucune piste multi-récepteurs par le premier module d'association;
- un module de fusion de pistes cartésiennes multi-récepteurs, réalisant l'élaboration d'une piste cartésienne multi-récepteurs unique à partir de pistes existantes présentant des similitudes,
- un module de contrôle vérifiant pour chaque piste cartésienne multi-récepteurs la vraisemblance de l'estimation du vecteur d'état estimé $\vec{x}_{k|k}$ caractérisant la piste.

L'état estimé pour chaque piste $\vec{x}_{k\,k}$ étant utilisé par le module de prédiction pour construire le vecteur d'état prédit de la piste $\vec{x}_{k+1|k}$ destiné à être associé aux plots constituant la trame de plots bistatiques multi-récepteurs suivante k+1.

Dans un mode de mise en oeuvre particulier, les modules de fusion de pistes cartésiennes des deux étapes de traitement mettent en oeuvre un même traitement de fusion qui considère les pistes cartésiennes deux à deux, ce traitement comportant deux phases:

- une première phase consistant à déterminer les pistes présentant de fortes similarités;
- une seconde phase consistant à tenter de fusionner les pistes considérées comme similaires.

Dans une forme de mise en oeuvre particulière, la première phase de fusion de pistes cartésiennes comporte:

- une première étape pour déterminer si certaines pistes paraissent suffisamment proches.
- une deuxième étape pour déterminer pour deux pistes A et B données si le vecteur d'état et la matrices de covariance de la piste A sont compatibles des mesures relatives à la piste B;
- une troisième étape pour déterminer pour les mêmes pistes A et B données si le vecteur d'état et la matrices de covariance de la piste B sont compatibles des mesures relatives à la piste A;

les pistes A et B forment alors une piste cartésienne fusionnée si l'ensemble des tests effectués au cours des trois étapes est positif.

Dans une autre forme de mise en oeuvre particulière, la deuxième étape de la première phase du traitement de fusion de pistes cartésiennes comporte:

- une première opération consistant à projeter le vecteur d'état et la matrice de covariance d'une première piste A dans les différents repères bistatiques d'une seconde piste B;
- une seconde opération consistant à vérifier que le vecteur d'état de la piste A projeté dans les différents repères bistatiques de la piste B est compatible de l'observation associée à la piste B pour la trame de plots k considérée; la vérification étant réalisée en tenant compte du bruit pouvant affecter les mesures.

la troisième étape de la première phase du module de fusion de pistes cartésiennes reproduit un traitement identique à la deuxième étape en inversant toutefois les rôles joués par les pistes A et B.

Dans une variante de cette forme de mise en oeuvre particulière, la seconde opération de la deuxième étape du traitement de fusion de pistes cartésiennes réalise, pour la piste A et pour chaque base bistatique ayant servi à mettre à jour l'état de la piste B, les vérifications suivantes:

- l'écart en distance bistatique entre l'observation attachée à la piste B et la projection de l'état de la piste A dans la base considérée est inférieur à une première valeur donnée.
- l'écart en vitesse bistatique entre l'observation attachée à la piste B et la projection de l'état de la piste A dans la base considérée est inférieur à une deuxième valeur donnée.
- l'écart en azimut entre l'observation attachée à la piste B et la projection de l'état de la piste A dans la base considérée est inférieur à une valeur troisième donnée;

La seconde opération de la troisième étape du module de fusion de pistes cartésiennes réalise réalisant les mêmes vérifications pour la piste B et pour chaque base bistatique ayant servi à mettre à jour l'état de la piste A.

Dans une autre forme de mise en oeuvre particulière, le traitement de fusion de pistes cartésiennes mets en oeuvre des opérations complémentaires permettant de prendre en compte l'âge des pistes A et B considérées et de comparer l'âge de ces pistes à un âge minimum, et d'effectuer selon les résultats des comparaisons:

- ni la deuxième étape, ni la troisième étape;
- seulement la deuxième étape;
- seulement la troisième étape;
- la deuxième étape et la troisième étape.

Selon un autre mode de mise en oeuvre particulier, le traitement mis en oeuvre par la première étape de formation de pistes cartésiennes mono-récepteur, peut comporter encore un module intermédiaire, qui vérifie si les pistes cartésiennes mises à jour par le module de filtrage présentent un caractère de divergence manifeste pour lequel les données cinématiques dans l'espace cartésien extraites de la piste considérée ne correspondent pas au type de cible considéré.

Selon un autre mode de mise en oeuvre particulier, le traitement, mis en oeuvre par la deuxième étape de formation de pistes cartésiennes multi-récepteurs, comporte encore un module intermédiaire, qui vérifie si les pistes cartésiennes mises à jour par le module de filtrage présentent un caractère de divergence manifeste pour lequel les données cinématiques dans l'espace cartésien extraites de la piste considérée ne correspondent pas au type de cible considéré.

Selon un autre mode de mise en oeuvre particulier, les modules de test de la divergence des pistes cartésiennes entretenues des deux étapes de traitement mettent en oeuvre un traitement identique qui considère un nombre maximum N de tests pouvant être réalisés pour une même trame n donnée et un nombre maximum P de trames séparant deux tests consécutifs d'une même piste, et qui réalise le test d'une nouvelle piste formée pour une trame n donnée aussitôt que possible à partir de l'apparition de la trame n+P.

Selon une forme de mise en oeuvre du mode précédent, les modules de test de la divergence des pistes cartésiennes entretenues réalise le test d'une piste donnée si la matrice de covariance $S_{k+1|k}$ de l'état prédit de la piste considérée remplit la condition de seuil suivante:

$$\det\left(S_{k+1|k}\right) \geq \mathrm{MaxDet}$$

dans laquelle MaxDet représente un seuil donné.

Selon un autre mode de mise en oeuvre particulier, la deuxième étape de traitement comporte un module complémentaire qui réalise, avant association des pistes mono-récepteur disponibles au pistes multi-récepteurs existantes une pré-actualisation des pistes multi-récepteurs existantes au moyen des plots formant la trame courante de plots bistatiques multi-récepteurs k, ce module consistant à considérer pour chaque piste multi-récepteurs, les pistes mono-récepteur lui ayant préalablement été associées pour la trames de plots multi-récepteurs précédente k-1 et à associer à l'estimation de la piste multi-récepteurs considérée les plots bistatiques attachés à ces pistes mono-récepteur.

Selon un autre mode de mise en oeuvre particulier, le procédé selon l'invention comporte une étape de traitement préliminaire consistant à réaliser un pistage bistatique des plots bistatiques produits par les différents récepteurs constituant le système radar multistatique et à attribuer à chacun des plots constituant une trame de plots bistatiques k, un indicateur binaire indiquant si le plot considéré est associé ou non à une piste bistatique.

Selon une forme de mise en oeuvre du mode précédent, les modules d'initialisation de pistes cartésiennes mono-récepteur et d'initialisation de pistes cartésiennes multi-récepteurs initialisent de nouvelles pistes à partir des plots bistatiques ayant été utilisés pour former des pistes bistatiques lors de l'étape préliminaire de traitement.

Selon une autre forme de mise en oeuvre du mode précédent, les modules d'association des plots bistatiques aux pistes cartésiennes des deux étapes de traitement utilisent un seuil d'association $\gamma$ suivant que le plot considéré est associé ou non à une piste bistatique.

Selon un autre mode de mise en oeuvre particulier, le procédé selon l'invention met en oeuvre un traitement préliminaire pour identifier pour chaque plot les émetteurs dont il ne peut manifestement pas être issu.

Selon l'invention, les différents modes de mise en oeuvre peuvent naturellement être combinés.

La mise en oeuvre du procédé selon l'invention permet, grâce à une implémentation en deux étapes, de répartir plus facilement la charge de calcul sur plusieurs processeurs en parallèle.

En outre ce procédé de pistage inclut des tests qui permettent avantageusement de considérer l'ensemble des associations possibles des plots élaborés avec l'ensemble des émetteurs du système, ce qui permet de résoudre le problème spécifique des modes de fonctionnement à canal fréquentiel unique (SFN).

De plus dans la mesure où la deuxième étape du procédé utilise à la fois les plots bruts issus des différents récepteurs et les résultats des associations préalablement réalisées lors de la première étape, l'efficacité de la fusion des données produites par les différents récepteurs est avantageusement renforcée.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:

- la figure 1, illustration permettant de définir les différents paramètres caractérisant un objet détecté par une base bistatique;
- la figure 2, un synoptique général du procédé selon l'invention;
- la figure 3, un synoptique de l'opération de filtrage des fausses alarmes mise en oeuvre par le procédé selon l'invention;

- la figure 4, un synoptique de l'étape de pistage mono-récepteur du procédé selon l'invention;
- la figure 5, un synoptique illustrant la première phase du module de fusion de pistes cartésiennes élémentaires de l'étape de pistage mono-récepteur du procédé selon l'invention;
- la figure 6, un synoptique de l'étape de pistage multi-récepteurs du procédé selon l'invention;

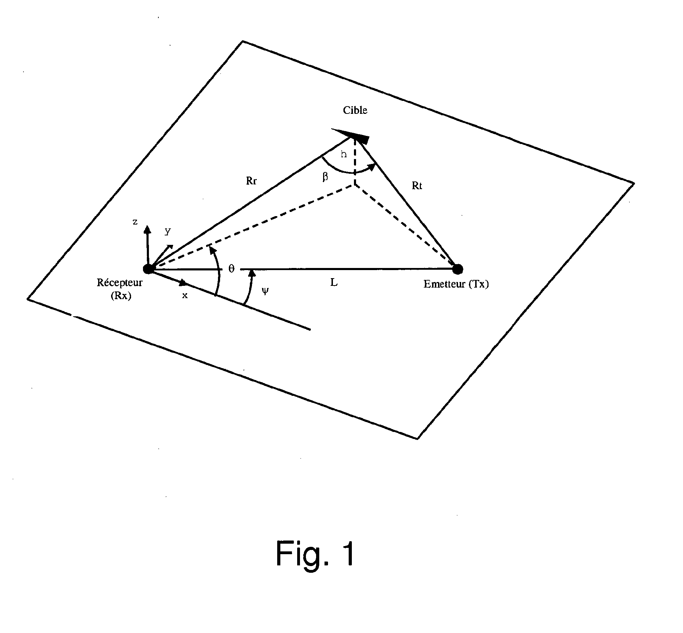

La figure 1 a pour objet d'illustrer le principe connu de la détection bistatique.

Le procédé selon l'invention traite les données brutes correspondant aux observations réalisées simultanément par un ou plusieurs récepteurs. Par suite, chaque base bistatique, constituée par l'association d'un récepteur et d'un émetteur, est configurée pour détecter un écho pour chaque cible évoluant dans la zone couverte par cette base.

Les observations brutes, ou plots bruts, extraites des échos détectés sont principalement définies par les paramètres suivants:

La distance bistatique: $D_b = R_r + R_t = \left\| \vec{x}_{Tg} - \vec{x}_{Rx} \right\| + \left\| \vec{x}_{Tg} - \vec{x}_{Tx} \right\|$

La vitesse bistatique: $V_b = \dot{R}_r + \dot{R}_t = \left( \dfrac{\vec{X}_{Tg} - \vec{X}_{Tx}}{R_t} + \dfrac{\vec{X}_{Tg} - \vec{X}_{Rx}}{R_r} \right) \cdot \vec{v}_{Tg}$

L'azimuth: $\theta = \arctan\left(\dfrac{y_{Tg} - y_{Rx}}{x_{Tg} - x_{Rx}}\right)$

où:

$\vec{x}_{Tg} = [x_{Tg}\ y_{Tg}\ z_{Tg}]^T$ est le vecteur position de la cible;

$\vec{x}_{Tx} = [x_{Tx}\ y_{Tx}\ z_{Tx}]^T$ est le vecteur position de l'émetteur Tx;

$\vec{x}_{Rx} = [x_{Rx}\ y_{Rx}\ z_{Rx}]^T$ est le vecteur position du récepteur Rx.

Chaque observation est ici considérée comme une variable aléatoire gaussienne centrée.

Pour chaque base bistatique, b, un plot est ainsi défini par le vecteur d'état et la matrice de covariance suivants:

$$y_{plot} = \begin{bmatrix} Db & vb & \theta \end{bmatrix}^T$$

$$R_{plot} = \begin{pmatrix} \sigma_{Db}^2 & 0 & 0 \\ 0 & \sigma_{Vb}^2 & 0 \\ 0 & 0 & \sigma_\theta^2 \end{pmatrix}$$

A une date donnée, une image de la situation aérienne est simultanément obtenue dans le repère de coordonnées relatives de chaque base bistatique. A cette date, l'ensemble des mesures réalisées par le radar est utilisé pour former une image instantanée, ou trame, constituée des plots bistatiques formés par le traitement radar opérant en amont du procédé chargé d'élaborer les pistes. Ainsi, pour cette date, une trame élémentaire ou mono-récepteur est formée avec les plots formés à partir des signaux reçus par chacun des récepteurs constituant le radar. De même une trame multi-récepteurs est formée pour cette date avec les plots formés à partir des signaux reçus par l'ensemble des récepteurs constituant le radar.

L'intervalle de temps T séparant les dates pour lesquelles deux trames successives de plots sont formées est par ailleurs défini par le fonctionnement intrinsèque du radar. Par suite, en supposant que les trames de plots sont référencées par ordre chronologique, l'instant t correspondant à la date de disponibilité d'une trame peut être assimilé au numéro de cette trame. Ainsi, si t est l'instant où la trame k est disponible pour le pistage, l'instant t', où la trame K+1 est à son tour disponible, est égal à t+T.

Dans la suite du document, les trames mono ou multi- récepteurs sont référencées par un indice, la trame courante, correspondant à la dernière trame disponible en date, étant définie comme la trame k.

Les attributs associés aux plots peuvent en outre être enrichis, en particulier dans un mode de fonctionnement SFN, par des informations complémentaires indiquant une association possible d'un plot avec un ou plusieurs émetteurs potentiellement à l'origine du signal ayant conduit à la formation du plot considéré. Cette information peut être formatée sous la forme d'un ensemble de variables booléennes dont la taille correspond au nombre d'émetteurs pouvant être associés avec le récepteur considéré. Si l'association du plot considéré avec un émetteur donné n'est pas réalisable de manière évidente, le booléen correspondant à cet émetteur est mis à 0. Dans le cas contraire ce booléen est mis à 1.

Outre ces attributs il est encore possible d'associer à un plot une Information complémentaire indiquant la probabilité que ce plot soit consécutif à une fausse alarme. Cette information peut par exemple être une information binaire élaborée en mettant en oeuvre un procédé de pistage bistatique qui réalise la liaison des plots issus de trames successives. Un plot ainsi pisté a une probabilité plus faible qu'un plot quelconque de correspondre à une fausse alarme.

Cette information complémentaire est alors égale à 0 pour les plots n'ayant pas donné lieu à la formation d'une piste bistatique (plots correspondant vraisemblablement à des fausses alarmes) et à 1 pour les plots ayant donné lieu à la formation d'une piste bistatique (plots supposés correspondre à des cibles réelles).

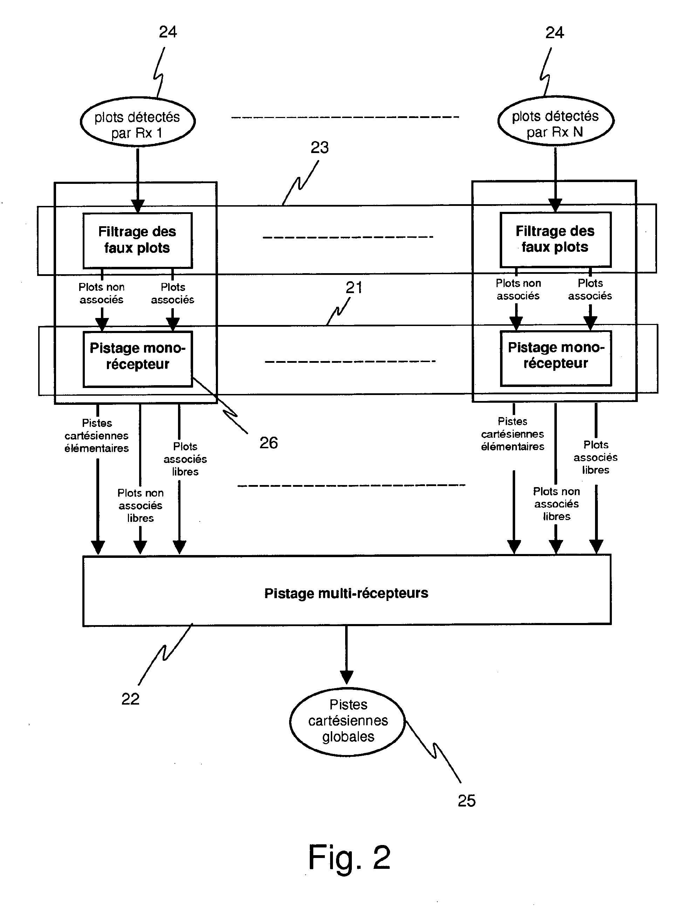

La figure 2 présente le synoptique global du procédé selon l'invention. Ce procédé a pour objet de construire et d'entretenir des pistes cartésiennes à partir des plots formés par les différentes bases bistatiques constituant le système considéré. Une base bistatique est constituée par un couple émetteur récepteur, sachant qu'il est possible de former plusieurs bases bistatiques à partir d'un même récepteur. Le problème consistant alors dans certains cas pour le récepteur à identifier l'émetteur à l'origine de l'écho détecté, c'est-à-dire à identifier la base bistatique dans laquelle un écho reçu doit être traité par un récepteur donné.

On rappelle qu'une piste cartésienne représente ici l'association au cours du temps de plusieurs plots bistatiques élaborés par plusieurs bases bistatiques et correspondant vraisemblablement à une même cible. Quelle que soit leur origine, c'est-à-dire la base bistatique dont ils sont issus, un ensemble de plots peut être représenté par un jeu de coordonnées cartésiennes dans un repère commun à tous les récepteurs.

Une piste cartésienne peut être définie par les attributs suivants:

- l'état cartésien de la piste, estimé par le procédé de pistage mis en oeuvre, cet état étant par exemple représenté par un vecteur de paramètres cinématiques relatif à la cible considérée sous la forme suivante:

$$x_{k|k} = \begin{pmatrix} x \\ v_x \\ y \\ v_y \\ z \\ v_z \end{pmatrix}$$

où x, y et z sont les coordonnées estimées par le procédé de pistage pour la trame courante k représentant, à la date correspondante, une cible dans le repère cartésien considéré et $v_x$, $v_y$ et $v_z$ les composantes du vecteur vitesse dans le même repère. Cette estimation est élaborée à partir des plots de la trame k et de l'état prédit $x_{k|k-1}$ de la piste, cet état étant prédit à partir de la trame k-1 précédente.

- la matrice de covariance $S_{k|k}$ associée décrit la précision des estimées des différentes composantes du vecteur $\vec{x}_{k|k}$.
- l'ensemble des plots associés (i. e. utilisés pour construire et entretenir la piste considérée) ainsi que leurs attributs (distance bistatique, vitesse bistatique et azimut) et les écarts-types correspondants.
- les identités des émetteurs et des récepteurs auxquels ces plots sont associés.
- l'état prédit $x_{k|k-1}$ de la piste cartésienne pour l'étape de d'actualisation précédente k-1, ainsi que la matrice de covariance $S_{k|k-1}$.

Pour réaliser la constitution de pistes cartésiennes à partir des échos traités par un même récepteur puis la fusion de récepteur à récepteur des pistes constituées, le procédé selon l'invention comporte, comme l'illustre la figure 2 deux étapes principales:

- une première étape 21 de pistage mono-récepteur qui consiste principalement à agglomérer les plots formés par les différentes bases bistatiques partageant le même récepteur pour former des pistes cartésiennes élémentaires;
- une seconde étape 22 de pistage multi-récepteurs qui consiste à former des pistes cartésiennes fusionnées à partir des informations issues de la première étape 21, c'est à dire les pistes élémentaires obtenues ainsi que les plots non utilisés pour la formation de pistes élémentaires.

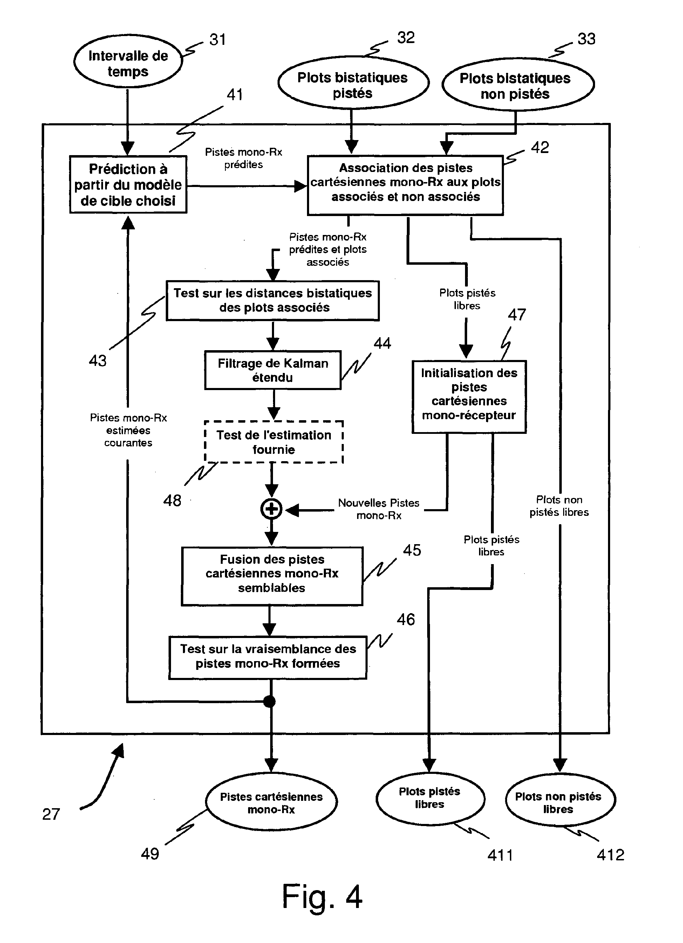

Selon l'invention encore, l'étape 21 met en oeuvre un traitement de pistage 41, illustré par la figure 4, qui est appliquée en parallèle sur les plots détectés par chaque récepteur considéré séparément. L'étape 22 quant à elle est commune à l'ensemble de récepteurs. Le procédé selon l'invention reçoit ainsi des plots en provenance des différents récepteurs, sous la forme de trames multi-récepteurs, et délivre à la suite du traitement des pistes cartésiennes résultant de la fusion de l'ensemble des plots disponibles à l'instant considéré. En outre, dans une forme de mise en oeuvre préférée, l'étape 21 est précédée par une étape préliminaire 23 de filtrage des faux plots bistatiques. On entend par "faux plots" les plots construits sur des détections d'échos erronées (fausses alarmes).

La suite de la description présente de manière plus détaillée le fonctionnement des deux étapes 21 et 22 ainsi que de l'étape préliminaire 23 du procédé.

Comme il a été dit précédemment, l'étape préliminaire 23 a pour objet d'éliminer les plots consécutifs à des fausses alarmes.

Cette opération peut être réalisée par différents moyens connus. Cependant un mode de réalisation connu, avantageux, consiste ici à considérer les plots bistatiques 24 délivrés par les moyens de traitement du signal situés en amont du procédé selon l'invention et à effectuer un pistage bistatique par tout moyen connu, le pistage bistatique étant réalisé séparément pour chaque récepteur. Un plot bistatique est, de manière connue, caractérisé par ses attributs qui sont principalement:

- la mesure de la distance bistatique du plot, ainsi que l'écart type de cette mesure de distance;
- la mesure de la vitesse bistatique du plot, ainsi que l'écart type de cette mesure de vitesse;
- la mesure de l'azimut du plot ainsi que l'écart type de cette mesure d'azimut;
- la valeur de l'intervalle de temps séparant la date de disponibilité de la trame courante de la date de disponibilité de la trame précédente.

D'un point de vue fonctionnel, dans le cadre du procédé selon l'invention, la mise en oeuvre d'un procédé de pistage bistatique par l'étape préliminaire 23 a pour unique fonction de séparer les plots bistatiques disponibles en deux groupes:

- les plots qui peuvent être associés pour former des pistes bistatiques et qui sont de ce fait très susceptibles de correspondre à des cibles réelles;
- les plots qui ne peuvent être associés à aucune piste bistatique et qui ont de ce fait que peu de chances de correspondre à des cibles réelles.

Par suite les pistes bistatique ainsi formées ne sont pas exploitées en tant que telles par la suite du procédé selon l'invention.

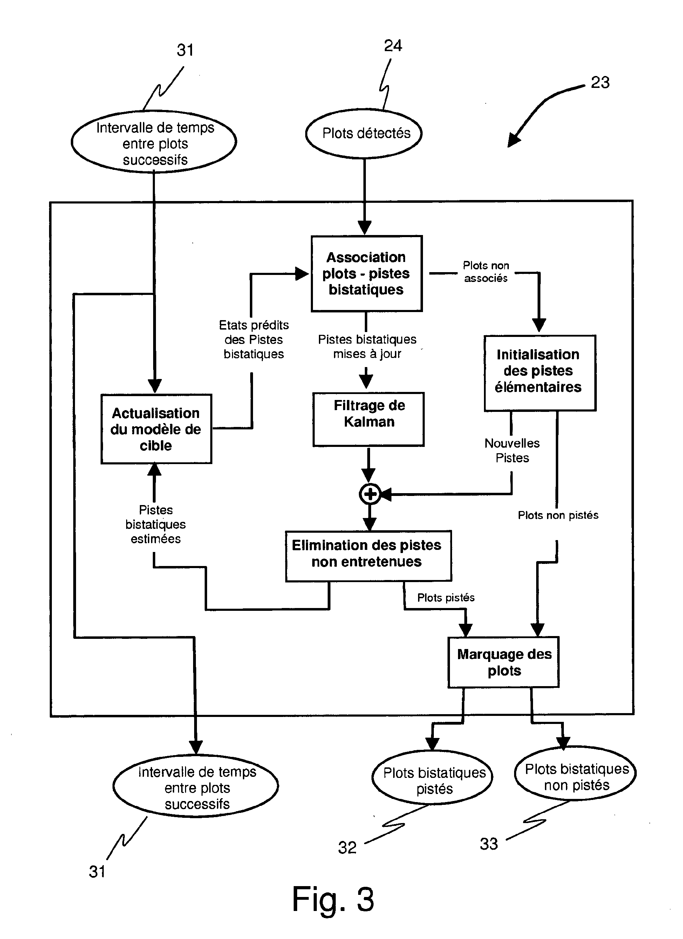

Il est à noter ici que tout procédé de pistage bistatique connu peut être mis en oeuvre dans le cadre de l'étape préliminaire 23. la figure 3 illustre de manière schématique les fonctionnalités mises en oeuvre dans un tel traitement de pistage. Cependant celui-ci doit être configuré de façon à restituer en sortie la valeur de l'intervalle de temps 31 séparant deux trames consécutives, ainsi que les plots bistatiques fournis par les moyens de traitement opérant en amont du procédé selon l'invention. Chaque plot doit en outre être accompagné d'une information binaire, de type Booléen, indiquant si le plot considéré a été associé (plot pisté 32) ou non (plot non pisté 33) à une piste bistatique.

Dans le contexte de l'invention, chaque plot peut en outre être accompagné d'une information indiquant l'ensemble des émetteurs du signal desquels le plot considéré ne peut être issu. Cette information est particulièrement utile dans le cas d'un réseau de type SFN ("Single Frequency Network" selon la dénomination anglo-saxonne) dans lequel les émetteurs utilisent tous la même bande de fréquence et pour lequel il est impossible de déterminer par la fréquence du signal correspondant l'émetteur à l'origine du plot considéré. Cette information complémentaire permet avantageusement, dans des étapes ultérieures du procédé selon l'invention, d'éviter de considérer l'association d'un plot donné avec l'un ou l'autre des émetteurs.

Pour produire cette information, on applique, préalablement à l'étape 21, à chaque plot bistatique 32 et 33, associé ou non, une série de tests permettant de déterminer si un plot peut être à coup sûr considéré comme n'étant pas originaire de tel ou tel émetteur.

Un premier test consiste à vérifier que la distance bistatique du plot considéré est en cohérence avec la distance L séparant l'émetteur et le récepteur considérés. On peut par exemple considérer que si la relation $Db+3.\sigma_{Db} > L$ est vérifiée alors le plot considéré ne peut être associé à la base considérée.

Un second test consiste à vérifier, en faisant certaines hypothèses sur l'altitude maximale des plots formés, que la distance bistatique et l'azimut du plot considéré ne correspondent pas à une position cartésienne très éloignée de la base considérée.

Un troisième test consiste à vérifier, en faisant certaines hypothèses sur l'altitude maximale des plots formés, que la valeur minimale de la vitesse du plot dans le repère cartésien est compatible avec une cible réelle, compte-tenu des valeurs de distance bistatique, de vitesse bistatique et d'azimut.

Il est à noter que, le premier test étant le plus rapide à exécuter, l'ordre adopté pour exécuter ces tests correspond généralement à l'ordre dans lequel ils sont énumérés ici. Cependant tout autre ordre d'exécution peut être adopté. Par ailleurs il est possible de n'effectuer qu'un ou deux des tests décrit ici.

Les plots 32 et 33 ainsi distingués sont transmis à la première étape 21 du traitement.

La première étape 21 du procédé selon l'invention a pour fonction de construire et d'entretenir des pistes cartésiennes à partir des plots élaborés à partir d'un même récepteur. Les plots associés pour former une même piste peuvent être issus des signaux émis par un seul émetteur ou bien des signaux émis par plusieurs émetteurs formant avec le récepteur considéré différentes bases bistatiques.

Comme l'illustre la figure 2, cette première étape 21 consiste à appliquer un même traitement, appelé pistage cartésien mono-récepteur, aux plots élaborés par chaque récepteur considéré séparément. La structure et le principe de fonctionnement de ce traitement 27 sont illustrés par la figure 4.

Du point de vue des interfaces, le traitement de pistage mono-récepteur 41 reçoit les plots bistatiques bruts élaborés par les moyens de traitement situé en amont du procédé selon l'invention associés au récepteur considéré, ainsi que la valeur de l'intervalle de temps séparant la trame courante k de la trame précédente k-1. Dans le cas où la première étape est précédée par une étape préliminaire 23 d'identification des faux plots bistatiques, les plots reçus par le traitement 27 sont des plots identifiés, chaque plot étant associé à un booléen qui indique s'il a été ou non associé à une piste bistatique.

Le traitement de pistage mono-récepteur 27 délivre en sortie les informations relatives aux pistes cartésiennes élémentaires élaborées, ainsi que les plots bruts ayant contribué à la formation ou à l'entretien d'une piste, chaque piste cartésienne élémentaire étant associée aux plots bistatiques bruts ayant contribués à la formation ou à l'entretien de cette piste.

Le traitement fournit également les informations relatives aux plots qui n'ont contribué à la formation ou à l'entretien d'aucune piste. Dans le cas où la première étape 21 est précédée par une étape préliminaire 23 d'identification des faux plots bistatiques, ces plots peuvent être des plots bistatiques qui ont été ou non associés à des pistes bistatiques.

Dans le contexte de l'invention, une piste cartésienne élémentaire est définie, pour une trame k donnée, par un vecteur d'état $x_{k|k}$, et par la matrice de covariance $S_{k|k}$ qui lui est associée. On peut ainsi écrire:

$$\vec{x}_{k|k} = \begin{bmatrix} x_{k|k} & vx_{k|k} & y_{k|k} & vy_{k|k} & z_{k|k} & vz_{k|k} \end{bmatrix}^T$$

où $[x_{k|k}\ y_{k|k\ k}\ z_{k|k}]$ représente la position de l'objet pisté dans le repère cartésien choisi et $[vx_{k|k}\ vy_{k|k}\ vz_{k|k}]$ la vitesse de cet objet dans le même repère.

Comme l'illustre la figure 4, l'étape 21 de pistage mono-récepteur met en oeuvre un traitement 27 comportant différents modules. Ce traitement 27 est appliqué séparément aux trames de plots bistatiques formés par un même récepteur. Ainsi si le système considéré comporte N récepteurs, le traitement 27 est mis en oeuvre N fois simultanément, comme l'illustre la figure 2.

Le traitement mis en oeuvre a pour fonction globale d'associer pour un même récepteur, les plots disponibles à un instant donné à des pistes cartésiennes élémentaires déjà formées à partir des plots disponibles aux instants de mesure précédents ou à effectuer l'initialisation de nouvelles pistes à partir des plots disponibles n'ayant pas encore été associés à une piste cartésienne. A cet effet il comporte les différents modules décrit dans la suite de la description.

Le traitement 27 comporte un premier module 41 dont la fonction est de réaliser la prédiction de l'état $x_{k|k-1}$ de chacune des pistes pour la trame courante k à partir de l'estimation $x_{k-1|k-1}$ de l'état cette piste réalisée à partir de la trame précédente k-1. La prédiction de l'état de la piste considéré se traduit ainsi par la production d'un vecteur d'état $x_{k|k-1}$ et d'une matrice de covariance $S_{k|k-1}$ prédits pour l'instant de mesure suivant, définis par les relations suivantes:

$$\vec{x}_{k|k-1} = F \cdot \vec{x}_{k-1|k-1}$$

$$S_{k|k-1} = F \cdot S_{k-1|k-1} \cdot F^T + Q$$

dans lesquelles F et Q sont définis par les expressions matricielles suivantes:

$$F = \begin{pmatrix} 1 & T & 0 & 0 & 0 & 0 \\ 0 & 1 & 0 & 0 & 0 & 0 \\ 0 & 0 & 1 & T & 0 & 0 \\ 0 & 0 & 0 & 1 & 0 & 0 \\ 0 & 0 & 0 & 0 & 1 & T \\ 0 & 0 & 0 & 0 & 0 & 1 \end{pmatrix}$$

et

$$Q = \sigma_\gamma^2 \begin{pmatrix} T^4/4 & T^3/2 & 0 & 0 & 0 & 0 \\ T^3/2 & T^2 & 0 & 0 & 0 & 0 \\ 0 & 0 & T^4/4 & T^3/2 & 0 & 0 \\ 0 & 0 & T^3/2 & T^2 & 0 & 0 \\ 0 & 0 & 0 & 0 & 0 & 0 \\ 0 & 0 & 0 & 0 & 0 & 0 \end{pmatrix} + \sigma_{v_z}^2 \begin{pmatrix} 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \\ 0 & 0 & 0 & 0 & T^3/3 & T^2/2 \\ 0 & 0 & 0 & 0 & T^2/2 & T \end{pmatrix}$$

T représente ici l'intervalle de temps séparant les dates auxquelles les trames k-1 et k sont disponibles.

Le paramètre $\sigma_\gamma$ représente quant à lui l'incertitude sur le modèle d'évolution de cible utilisé pour réaliser la prédiction. $\sigma_\gamma$ peut ici être déterminé par mise en oeuvre de tout algorithme approprié, par exemple l'algorithme de filtrage de Castella qui a pour effet d'accroitre cette valeur dans le cas d'une cible manoeuvrante, de façon à renforcer les capacités de pistage. Accroître $\sigma_\gamma$ revient en effet à considérer que le modèle d'évolution de la cible, donné par la matrice F, n'est pas représentatif de l'évolution réelle de la cible.

Le traitement 27 comporte également un deuxième module 42 dont la fonction est de réaliser l'association des plots disponibles à un instant de mesure donné avec des pistes cartésiennes existantes. Les plots disponibles sont ici les plots bistatiques produits par les moyens de traitement opérant en amont du procédé selon l'invention. Dans le mode de mise en oeuvre préféré comportant une étape préliminaire 23, ces plots sont en outre identifiés en tant que plots associés à une piste bistatique ("plots pistés") ou en tant que plots non associés à une piste bistatique ("plots non pistés"). Selon l'invention, l'association d'un plot bistatique à une piste cartésienne est réalisée en considérant l'état prédit de la piste pour l'instant de mesure correspondant au plot considéré, cet état étant déterminé par le module d'actualisation 42. Le plot constitue ici une observation qui vient confirmer ou non l'évolution prédite de l'état de la piste cartésienne considérée.

D'un point de vue fonctionnel, le mécanisme d'association consiste à projeter le vecteur d'état prédit associé à la piste cartésienne considérée, ainsi que la matrice de covariance de ce vecteur d'état prédit, dans une base bistatique donnée, formée par le récepteur considéré et par un des émetteurs du système. Cette projection permet de déterminer, dans la base bistatique donnée, le vecteur d'observation prédit formé des attributs associés pour la trame de plots courante k. Selon l'invention, cette projection peut être réalisée par toute méthode connue. Une méthode convenable doit cependant impérativement permettre l'estimation de la moyenne et de la covariance d'une variable aléatoire, après passage par une fonction non linéaire.

Ainsi, pour une cible donnée, la fonction non linéaire permettant l'opération de projection est définie par relations suivantes:

$$Db_i = \sqrt{(x_i - x_{Tx})^2 + (y_i - y_{Tx})^2 + (z_i - z_{Tx})^2} \\ + \sqrt{(x_i - x_{Rx})^2 + (y_i - y_{Rx})^2 + (z_i - z_{Rx})^2}$$

$$Vb_i = \frac{(x_i - x_{Tx}).vx_i + (y_i - y_{Tx}).vy_i + (z_i - z_{Tx}).vz_i}{\sqrt{(x_i - x_{Tx})^2 + (y_i - y_{Tx})^2 + (z_i - z_{Tx})^2}} \\ + \frac{(x_i - x_{Rx}).vx_i + (y_i - y_{Rx}).vy_i + (z_i - z_{Rx}).vz_i}{\sqrt{(x_i - x_{Rx})^2 + (y_i - y_{Rx})^2 + (z_i - z_{Rx})^2}}$$

$$\theta_i = \arctan\left(\frac{y_i - y_{Rx}}{x_i - x_{Rx}}\right)$$

où i est l'identifiant de la base bistatique dans laquelle s'opère la projection et où $X_{Tx}$, $Y_{TX}$, et $Z_{TX}$, d'une part et $X_{Rx}$, $Y_{Rx}$, et $Z_{Rx}$, représentent les coordonnées respectives de l'émetteur et du récepteur dans la base bistatique i considérée; $X_i$, $Y_i$, et $Z_i$ représentant les coordonnées cartésiennes de la cible considérée, et vx, vy, vz sa vitesse cartésienne. $Db_i$, $Vb_i$ et $\theta_i$ sont quant à eux les coordonnées de la cible considérée, projetées dans la base bistatique i.

Cette projection permet de déterminer le vecteur d'observation prédit $y_{k|k-1}$ correspondant, à l'instant considéré, au plot type:

$$y_{k|k-1} = \begin{bmatrix} Db_{k|k-1} & Vb_{k|k-1} & \theta_{k|k-1} \end{bmatrix}^T$$

ainsi que la matrice de covariance $R_{k|k-1}$ associée.

Ce plot type est ensuite comparé aux plots disponibles, la comparaison pouvant être réalisée par toute méthode connue. Cette comparaison est basée sur la mesure de la distance statistique définie par la relation suivante:

$$d = \left(y_{k|k-1} - y_k^{obs}\right)^T . \left(R_{k|k-1} + R_k^{obs}\right)^{-1} . \left(y_{k|k-1} - y_k^{obs}\right)$$

dans laquelle $y_k^{obs}$ représente le vecteur d'observation du plot disponible considéré et où $R_k^{obs}$ représente la matrice de covariance associée au vecteur $y_k^{obs}$.

Cette distance statistique d est ensuite comparée à un seuil donné $\gamma$, déterminé à partir d'une table fonction du nombre de degrés de liberté de l'expression $\left(y_{k|k-1} - y_k^{obs}\right)$ et de la probabilité de fausses associations plot-piste définie.

Par suite la condition d'association peut être définie par la relation suivante:

$$d \leq \gamma$$

L'opération d'association plot bistatique - piste cartésienne est ainsi réalisée, pour chaque trame de plots, pour chaque piste déjà formée. Les plots disponibles dont le vecteur d'observation $y_k^{obs}$ remplit les conditions de distance définies précédemment sont associés aux pistes cartésiennes considérées, tandis que les autres plots, ayant fait l'objet d'un pistage bistatique ou non, restent disponibles.

Il est à noter que, dans le cas où pour une piste bistatique donnée, plusieurs plots satisfont, aux conditions de distance définies précédemment, alors seul le plot le plus proche est conservé. De même si plusieurs pistes peuvent prétendre s'associer à un même plot, l'association produisant la distance la plus faible est conservée.

Le module 42 fournit ainsi un jeu de pistes réactualisées à l'instant considéré, ainsi qu'un jeu de plots bistatiques libres de toute association dont le vecteur d'observation est également réactualisé. En outre, dans le cas où l'étape 21 du procédé est précédée de l'étape préliminaire 23 de filtrage des faux plots bistatiques, les plots non associés à une piste cartésienne et ayant fait l'objet d'une association avec une piste bistatique, encore appelés plots pistés libres et les plots n'ayant pas fait l'objet d'une association avec une piste bistatique, encore appelés plots non pistés libres, sont considérés séparément, comme l'illustre la figure 4.

Il est à noter que dans la mesure où les plots bistatiques non pistés sont par nature plus susceptibles de correspondre à de faux plots, à de la fausse alarme, que les plots pistés, il est possible d'effectuer l'opération d'association plot-piste en considérant un seuil $\gamma$ différent dans les deux cas, reflétant le degré de confiance attribué au plot considéré. Le seuil $\gamma$ peut ainsi être plus élevé pour les plots pistés et plus faible pour les plots non pistés.

Il est par ailleurs à noter que dans le cas ou le système multistatique considéré est de type "SFN", l'attribut de non-association d'un plot bistatique à un émetteur donné permet de ne considérer, pour chaque base bistatique que les plots ne validant pas cet attribut pour l'émetteur formant la base bistatique. Ce tri préalable permet de diminuer le nombre de test d'association à réaliser par base bistatique.

Le traitement 27 comporte encore un troisième module 43 dont la fonction consiste à vérifier le caractère convergent des pistes cartésiennes entretenues en détectant et éliminant les pistes prédites manifestement divergentes. Pour ce faire le module 43 met en oeuvre un traitement particulier dit "d'intersection" qui a pour fonction de déterminer à partir des distances bistatiques des plots bistatiques bruts associés à une même piste par le module 42 et des écarts-types associés, la position la plus probable de l'intersection des lieux (ellipsoïde) sur lesquels peuvent se situer les objets correspondant à ces plots, ainsi que la probabilité associée à ce point. Par suite si la probabilité liée à l'intersection ainsi déterminée est faible, c'est-à-dire inférieur à un seuil donné, la piste cartésienne associée à ces plots est effacée et par suite non traitée par le module de filtrage 44 qui suit.

Il est à noter ici que le test réalisé nécessitant la détermination, pour chaque piste ayant été associée à des plots, du point d'intersection le plus probable, le traitement mis en oeuvre est particulièrement couteux en termes de quantité calculs, c'est-à-dire de temps. Par suite il n'est généralement pas possible, pour chaque instant de mesure, pour chaque nouvelle trame de plots, de réaliser ce test pour chacune des pistes existantes. Le test est donc réalisé pour chacune des pistes avec une périodicité qui tient compte du nombre de pistes entretenues, du nombre de pistes pouvant être testées entre deux arrivées successives de trames de plots bistatiques et du temps maximum acceptable séparant deux tests consécutifs d'une même piste, ce temps étant notamment fonction du caractère plus ou moins divergent du filtre de Kalman mis en oeuvre. L'instant pour lequel une piste doit être testée peut être déterminé de différentes façons.

On peut par exemple considérer que, le nombre de tests réalisés pour une même trame étant limité à un nombre N donné et le nombre P de trames séparant deux tests consécutifs d'une même piste étant également fixé, une nouvelle piste formée pour une trame n donnée doit être testée aussitôt que possible à partir de l'apparition de la trame n+P, cette condition se traduisant par les alternatives suivantes:

- Si le nombre de pistes testées pour la trame n+P est inférieur à N, alors la piste doit être testée durant la période correspondant à la trame de plots n+P;
- Si le nombre de pistes testées pour la trame n+P est supérieur à N, alors la piste doit être testée durant la période ultérieure la plus proche de la période correspondant à la trame de plots n+P, pour laquelle le nombre de pistes testées est inférieur à N.

Alternativement, on peut par exemple considérer qu'une piste doit être testée si la matrice de covariance $S_{k+1|k}$ de l'état prédit de la piste considérée remplit la condition de seuil suivante:

$$\det\left(S_{k+1|k}\right) \geq MaxDet$$

dans laquelle MaxDet représente un seuil donné.

On peut encore envisager de considérer ensemble les deux modalités de détermination décrites précédemment et appliquer telle ou telle modalité selon la piste considérée.

Ainsi, si on considère par exemple le nombre total de pistes testé entre deux arrivées de trames de plots bistatiques est limité à dix, que chaque piste doit être traitée au moins une fois toutes les quinze trames, et que la trame courante est la trame cinq, une piste nouvelle sera testée lors de l'exploitation de la trame vingt.

Le traitement 27 comporte encore un quatrième module 44, dont la fonction est de déterminer, pour chaque piste cartésienne, à partir du vecteur d'état $\vec{x}_{k|k-1}$ et de la matrice de covariance $S_{k|k-1}$ prédits pour la trame courante k et des plots de la trame courante associés à la piste (vecteur d'observation $y_k^{obs}$ et matrice de covariance $R_k^{obs}$), le vecteur d'état $\vec{x}_{k|k}$ et la matrice de covariance $S_{k|k}$ estimés correspondants.

Selon l'invention cette opération est réalisée, de manière connue, par mise en oeuvre d'un filtre de Kalman étendu par exemple.

Il est à noter que pour les pistes cartésiennes n'ayant fait l'objet d'aucune association pour la trame courante k, le module 44 fonctionne dans un mode particulier ("mode prédiction") pour lequel l'état estimé de la piste pour l'instant considéré correspond à l'état prédit par le module 41 pour le même instant. On a alors:

$$\vec{x}_{k|k} = \vec{x}_{k|k-1}$$

et

$$S_{k|k} = S_{k|k-1}$$

Ce fonctionnement particulier pour une piste donnée n'est cependant possible que durant un intervalle de temps correspondant à un nombre restreint d'observations, après quoi la piste considérée est éliminée.

Le traitement 27 comporte encore un cinquième module 45, dont la fonction est de réaliser la fusion des pistes cartésiennes jugées suffisamment proches pour être considérées comme correspondant à une seule et même piste. L'existence de telles pistes peut résulter de l'initialisation de nouvelles pistes à partir des plots bistatiques n'ayant pas servi à l'entretien de pistes existantes, ou encore du caractère divergent du filtre de Kalman mis en oeuvre pour estimer les vecteurs d'états des pistes entretenues. Ce caractère divergent se traduit parfois par la création de nouvelles pistes présentant des positions et des vitesses très voisines.

Selon l'invention, le module 45 est organisé en deux phases:

- une première phase consistant à déterminer les pistes présentant de fortes similarités
- une seconde phase consistant à tenter de fusionner les pistes considérées comme similaires.

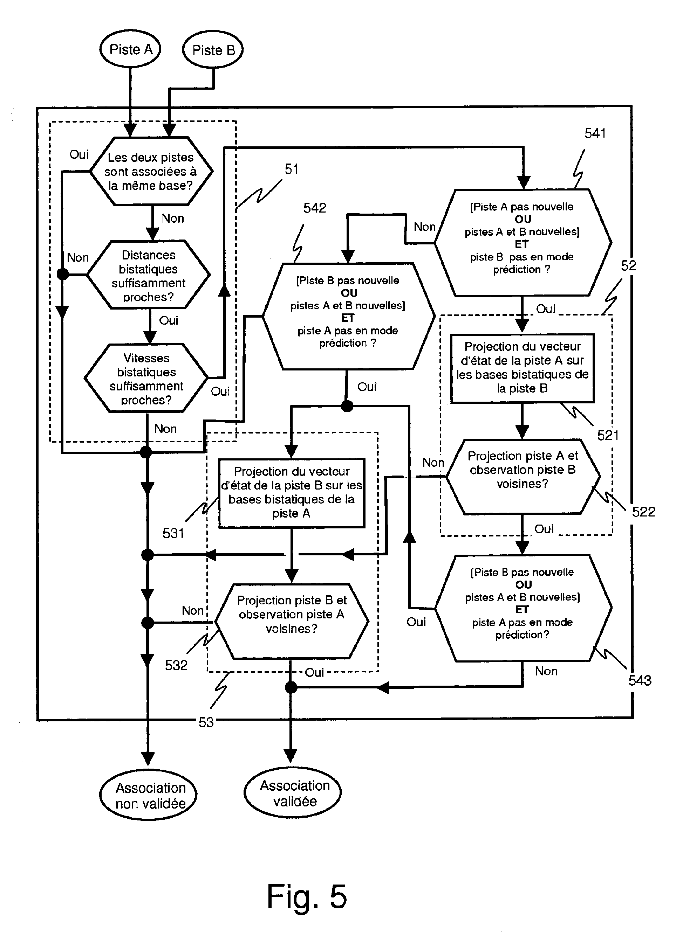

Comme l'illustre la figure 5, la première phase comporte elle-même trois étapes 51, 52 et 53.

La première étape 51 consiste à effectuer un test grossier visant à déterminer si certaines pistes paraissent suffisamment proches. Plus précisément, les pistes étant considérées deux à deux, le test consiste à déterminer:

- si les pistes proviennent de bases bistatiques différentes
- si l'écart de position cartésienne entre les deux pistes considérées, dans un même repère à deux dimensions (un plan), est inférieur à une valeur donnée;
- si l'écart de vitesse cartésienne entre les deux pistes considérées, dans un même repère à deux dimensions (un plan), est inférieur à une valeur donnée.

La deuxième étape 52, et la troisième étape 53, quant à elles, concernent les groupes de deux pistes A et B jugées suffisamment proches en première analyse.

La deuxième étape 52 considère, pour chaque groupe de deux pistes A et B, une des deux pistes la piste A par exemple, et réalise les opérations suivantes:

- la première opération 521 consiste à projeter le vecteur d'état et la matrice de covariance de la piste A dans les différents repères bistatiques de la piste B. Cette projection est par exemple réalisée par transformation non-parfumée ou "unscented" selon la terminologie anglo-saxonne.
- la seconde opération 522 consiste à vérifier que le vecteur d'état de la piste A projeté dans les différents repères bistatiques de la piste B est compatible de l'observation associé à la piste B pour l'instant considéré. Autrement dit, on verifie, pour chaque base bistatique ayant servi à mettre à jour l'état de la piste B, que
- l'écart en distance bistatique entre l'observation attachée à la piste B et la projection de l'état de la piste A dans la base considérée est inférieur à une valeur donnée.
- l'écart en vitesse bistatique entre l'observation attachée à la piste B et la projection de l'état de la piste A dans la base considérée est inférieur à une valeur donnée.
- l'écart en azimut entre l'observation attachée à la piste B et la  projection de l'état de la piste A dans la base considérée est inférieur à une valeur donnée.

La vérification est ici réalisée en tenant compte du bruit pouvant affecter les mesures.

La troisième étape 53 reproduit au travers des opérations 531 et 532 un traitement identique à la deuxième étape 52 en inversant toutefois les rôles joués par les pistes A et B.

Par suite si l'ensemble des tests effectués au cours des trois étapes est positif les pistes A et B sont considérées comme des candidates vraisemblables pour une fusion.

Il est à noter que, selon l'invention, l'opération 522 n'est pas exécutée si la piste B est mise à jour en mode prédiction, c'est-à-dire si aucun plot bistatique ne vient plus contribuer à la mise à jour de cette piste. Il en va de même pour l'opération 532 dans le cas où la piste A est mise à jour en mode prédiction. L'occurrence simultanée de ces deux cas interdit en outre l'association des pistes A et B.

Il est à noter également que dans une forme particulière de mise en oeuvre du procédé selon l'invention, une étape complémentaire 54 peut être mise en oeuvre entre l'étape 52 et l'étape 53. Cette étape, qui permet de mieux garantir les chances de succès à terme de la fusion de deux pistes, prend en compte l'âge des pistes considérées et compare l'âge de ces pistes à un âge minimum. Par suite si l'âge d'une des deux pistes est inférieur à cet âge minimum la piste en question est considérée comme trop nouvelle et sa fusion avec l'autre piste est interdite. Pour mettre en oeuvre cette étape complémentaire, différents critères d'âge peuvent être retenus, l'âge d'une piste pouvant être défini de différentes façons. On peut ainsi considérer, par exemple:

- le nombre de trames de plots bistatiques formés, séparant la trame courante de la trame à partir de laquelle la piste a été formée;
- l'intervalle de temps séparant l'instant considéré de l'instant pour lequel la piste à été formée;
- le nombre de trames pour lesquelles l'association d'un plot bistatique  avec la piste considérée a eu lieu.

Par suite lorsque l'étape complémentaire est implémentée, sous forme de tests 541, 542 et 543, le déroulement des étapes 52 et 53 se trouve modifié par l'insertion des tests suivants:

- si l'âge de la piste A est inférieur à l'âge minimum ("AgeMin") et si l'âge de la piste B est supérieur à l'âge minimum, alors l'étape 52 n'est pas mise en oeuvre et le test effectué à l'issue de l'étape 51 porte seulement sur les résultats de l'étape 53.
- si l'âge de la piste A est supérieur à l'âge minimum ("AgeMin") et si l'âge de la piste B est inférieur à l'âge minimum, alors l'étape 53 n'est pas mise en oeuvre et le test effectué à l'issue de l'étape 51 porte seulement sur les résultats de l'étape 52.
- si l'âge de la piste A est supérieur à l'âge minimum ("AgeMin") et si l'âge de la piste B est supérieur à l'âge minimum, ou si l'âge de la piste A est inférieur à l'âge minimum ("AgeMin") et si l'âge de la piste B est inférieur à l'âge minimum alors les étapes 52 et 53 sont mises en oeuvre et le test effectué à l'issue de l'étape 51 porte seulement sur les résultats des deux étapes.

La seconde phase du module 45 de fusion des pistes semblables consiste à considérer les pistes A et B ayant satisfait les tests mis en oeuvre durant les étapes 51 à 53 de la première phase et à créer une nouvelle piste par fusion de ces dernières.

Selon l'invention cette nouvelle piste cartésienne est représentée par un vecteur d'état égal à la moyenne statistique des vecteurs d'états des pistes cartésiennes fusionnées A et B. Il est donné par l'expression suivante:

$$x_{k|k,fus} = \left( S_{k|k,A}^{-1} + S_{k|k,B}^{-1} \right)^{-1} \cdot \left( S_{k|k,A}^{-1} \cdot x_{k|k,A} + S_{k|k,B}^{-1} \cdot x_{k|k,B} \right)$$

Selon l'invention encore, la matrice de covariance associée est égale à la somme des matrices de covariance associées aux vecteurs d'états représentant les pistes A et B:

$$S_{k|k,fus} = \left( S_{k|k,A}^{-1} + S_{k|k,B}^{-1} \right)^{-1}$$

Cette nouvelle piste est en outre associée à un ensemble de plots constitué par le regroupement des plots associés aux pistes A et B.

Comme il a été dit précédemment, le module 45 réalise la fusions des pistes élémentaires bistatiques présentant une grande similitude. Ces pistes pouvant être des pistes déjà formées et entretenues depuis un certain temps ou encore des pistes nouvellement initialisées. Comme l'illustre la figure 4, l'initialisation de nouvelles pistes est réalisée par un module spécifique d'initialisation 47. ce module a pour fonction de considérer l'ensemble des plots bistatiques qui n'ont pas été utilisés comme observations pour effectuer l'actualisation de pistes cartésiennes existantes. Idéalement, seuls sont pris en compte les plots identifiés comme ayant été associés à des pistes bistatiques, des plots bistatiques pistés. Ces plots sont associés au cours du temps, au fil des mesures, de façon à déterminer si une association ne conduit pas à identifier une nouvelle piste dont les plots associés constitueraient les observations. De la sorte, lorsqu'une nouvelle piste est identifiée, elle est intégrée à l'ensemble des pistes déjà existantes. Cette nouvelle piste est caractérisée par son vecteur d'état, sa matrice de covariance et les plots ayant conduit à son initialisation lui sont associés.

Par suite, les plots bistatiques pistés n'ayant donné naissance à aucune piste à l'instant considéré sont délivrés à l'étape 21 de pistage multi-récepteurs de même que les plots bistatiques non pistés.

Selon l'invention le module d'initialisation peut être réalisé par tout procédé connu.

Le traitement 27 comporte encore un sixième module 46, dont la fonction est de détecter et de supprimer les pistes cartésiennes élémentaires ne correspondant vraisemblablement pas à une cible réelle. De telles pistes sont généralement dues au caractère divergent du filtre de Kalman mis en oeuvre par le module 44.

Pour procéder à cette détection, le module 46 compare dans un  premier temps la vitesse de la piste rapportée au sol, c'est-à-dire sans tenir compte du paramètre altitude, avec un seuil de vitesse donné, correspondant par exemple à la vitesse maximale que peut atteindre une cible réelle. Ensuite, si le test est positif, c'est-à-dire si la vitesse de la piste considérée est inférieure au seuil, le module 46 effectue l'estimation de l'accélération de la piste à partir des valeurs de la vitesse issues des vecteurs d'état de la piste de la trame courante $\vec{x}_{k|k}$, et de la trame précédente $\vec{x}_{k-1|k-1}$. Cette estimation est alors comparée à un seuil correspondant à l'accélération maximale admissible pour une cible réelle.

Par suite si une piste cartésienne ne satisfait pas l'un ou l'autre de ces tests elle est éliminée.

Il est à noter que, dans une forme de mise en oeuvre préférée, du procédé selon l'invention, le traitement 27 comporte encore un module intermédiaire 48, dont la fonction est de vérifier si les pistes cartésiennes mises jour en sortie du module 44 présentent un caractère de divergence manifeste. Par divergence on entend que les données cinématiques dans l'espace cartésien extraites de la piste considérée ne peuvent concorder avec le type de cibles suivies.

Pour implémenter cette fonction il est possible d'utiliser divers tests connus. Cependant, un test avantageux consiste à vérifier la cohérence en altitude des estimations successives produites. En effet la mesure d'altitude est généralement opéré relativement à un plan de référence, un plan horizontal par exemple. Par suite, l'altitude mesurée peut généralement être comptée en positif ou en négatif par rapport à ce plan, la position du plot projetée sur ce plan étant dans les deux cas sensiblement la même. En outre, du fait que la mesure d'altitude et des paramètres associés (vitesse, accélération, etc...) est généralement peu précise, la prise en compte de ces mesures peut rapidement conduire à faire diverger une piste cartésienne donnée de sorte que l'altitude associée à la piste peut devenir incompatible des paramètres d'évolution des cibles détectées. Pour éviter ce phénomène le module 45 effectue un test systématique de l'altitude associée à chacune des pistes. Le test consiste principalement à considérer deux limites d'altitude une limite basse, généralement fixée à zéro ou à une valeur faiblement négative et une limite haute ou altitude maximale.

Par suite, le traitement réalisé par le module 48 consiste à distinguer deux cas extrêmes pour lesquels le vecteur d'état de la piste considéré est modifié en ce qui concerne l'altitude de la piste:

-    un premier cas pour lequel, l'altitude mesurée associée à la piste à l'instant courant étant proche de la limite basse, l'altitude attribuée à la piste est égale à la valeur absolue de l'altitude mesurée.

- un second cas pour lequel, l'altitude mesurée associée à la piste à l'instant courant étant supérieur à la limite haute, l'altitude attribuée à la piste est égale à l'altitude maximale.

Dans ces deux cas extrêmes, toutes les mesures des grandeurs dérivées de l'altitude, la vitesse de montée en particulier, sont mises à zéro et leurs matrices de covariance réinitialisées. En pratique, seule la partie liée à l'altitude est modifiée. Les valeurs choisies sont des valeurs par défaut réglées de manière à continuer l'opération de pistage sans accroc. Pour le vecteur d'état, et la matrice de covariance associée, définis en entrée de module par:

$$
x_{k|k} = \begin{pmatrix} x \\ v_x \\ y \\ v_y \\ z \\ v_z \end{pmatrix}
$$

et

$$
S_{k|k} = \begin{pmatrix}
\sigma^2_{xx} & \sigma^2_{v_x x} & \sigma^2_{yx} & \sigma^2_{v_y x} & \sigma^2_{zx} & \sigma^2_{v_z x} \\
\sigma^2_{xv_x} & \sigma^2_{v_x v_x} & \sigma^2_{yv_x} & \sigma^2_{v_y v_x} & \sigma^2_{zv_x} & \sigma^2_{v_z v_x} \\
\sigma^2_{xy} & \sigma^2_{v_x y} & \sigma^2_{yy} & \sigma^2_{v_y y} & \sigma^2_{zy} & \sigma^2_{v_z y} \\
\sigma^2_{xv_y} & \sigma^2_{v_x v_y} & \sigma^2_{yv_y} & \sigma^2_{v_y v_y} & \sigma^2_{zv_y} & \sigma^2_{v_z v_y} \\
\sigma^2_{xz} & \sigma^2_{v_x z} & \sigma^2_{yz} & \sigma^2_{v_y z} & \sigma^2_{zz} & \sigma^2_{v_z z} \\
\sigma^2_{xv_z} & \sigma^2_{v_x v_z} & \sigma^2_{yv_z} & \sigma^2_{v_y v_z} & \sigma^2_{zv_z} & \sigma^2_{v_z v_z}
\end{pmatrix}
$$

Le module modifie le vecteur d'état et la matrice de covariance de la manière suivante:

$$
x_{k|k} = \begin{pmatrix} x \\ v_x \\ y \\ v_y \\ z_{Init} \\ 0 \end{pmatrix}
$$

et

$$S_{k|k} = \begin{pmatrix} \sigma^2_{xx} & \sigma^2_{v_xx} & \sigma^2_{yx} & \sigma^2_{v_yx} & 0 & 0 \\ \sigma^2_{xv_x} & \sigma^2_{v_xv_x} & \sigma^2_{yv_x} & \sigma^2_{v_yv_x} & 0 & 0 \\ \sigma^2_{xy} & \sigma^2_{v_xy} & \sigma^2_{yy} & \sigma^2_{v_yy} & 0 & 0 \\ \sigma^2_{xv_y} & \sigma^2_{v_xv_y} & \sigma^2_{yv_y} & \sigma^2_{v_yv_y} & 0 & 0 \\ 0 & 0 & 0 & 0 & \sigma^2_{zz,Init} & 0 \\ 0 & 0 & 0 & 0 & 0 & \sigma^2_{v_zv_z,Init} \end{pmatrix}$$

où $\sigma_{zz,Init}$ et $\sigma_{vzvz}$,Init sont des valeurs d'écart type respectivement sur l'altitude et sa dérivée par rapport au temps qui sont choisies de manière à permettre à l'opération de pistage de continuer à fonctionner. Ces valeurs sont déterminées de manière expérimentale.

En revanche, en dehors de ces deux cas le module 48 laisse le vecteur d'état de la piste considéré, et la matrice de covariance associée, inchangés.

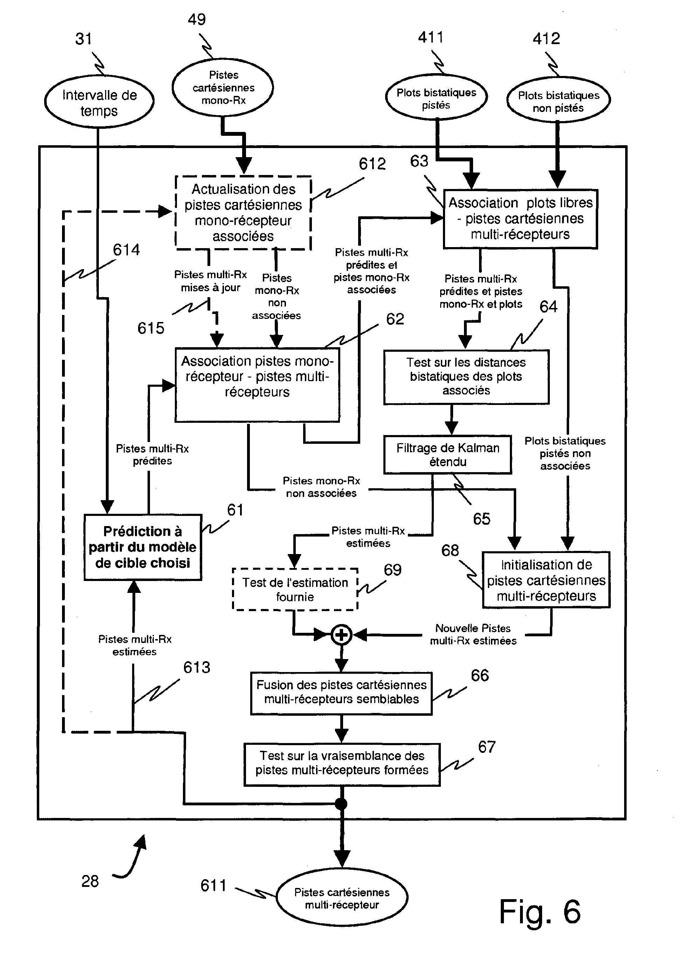

La deuxième étape 22 du procédé selon l'invention est illustrée par la figure 6. Elle a pour fonction de réaliser, chaque fois que cela est possible, la fusion des plots formés par les différents récepteurs en s'appuyant sur les pistes cartésiennes élaborées et entretenues au cours de l'étape 21 de pistage mono-récepteur, de façon à former des pistes prenant en compte tous les récepteurs. On parle ici de pistage multi-récepteur et de pistes fusionnées.

De manière générale, la deuxième étape du procédé selon l'invention prend en compte les données suivantes:

- les plots bistatiques bruts libres, non utilisé au cours de l'étape 21 pour initialiser ou entretenir des pistes cartésiennes mono-récepteur (pistes cartésiennes élémentaires). Dans le cas où le procédé selon l'invention comporte une étape préliminaire 23 de détection des faux plots, ces plots libres peuvent être:
- soit des plots bistatiques pistés 411, c'est-à-dire des plots ayant fait l'objet d'associations plot-piste dans le cadre de l'opération de pistage bistatique réalisée par le module complémentaire;
- soit des plots bistatiques non pistés 412, c'est-à-dire des plots n'ayant pas fait l'objet d'association plot-piste.
- les pistes cartésiennes 49 formées lors de l'étape 21 de pistage mono-récepteur, accompagnées des plots bistatiques ayant contribué à ces pistes et des positions d'émetteurs et de récepteurs correspondant, une piste étant caractérisée par son vecteur d'état et de la matrice de covariance associée;
- l'écart de temps 31 séparant deux trames consécutives de plots bistatiques disponibles.

Ces données sont traitées de façon à constituer des pistes cartésiennes globales, "multi-récepteurs" qui résultent à la fois de la fusion des pistes mono-récepteur et de l'agglomération, sur ces pistes, des plots laissés libres par l'étape 21 précédente.

Comme la première étape 21 de pistage mono-récepteur, l'étape 22 de pistage multi-récepteurs mets en oeuvre un traitement 28 qui comporte certain nombre de modules décrits dans le texte qui suit.

Un premier module de traitement 61 a pour fonction d'actualiser, au rythme de l'arrivée des pistes mono-récepteur formées par le module 21, les vecteurs d'état prédits $\vec{x}_{k|k-1}$ associé pour la trame courante à chacune des pistes cartésiennes multi-récepteur déjà formées. De manière similaire à ce qui est réalisé par le module 41 du traitement 27 de l'étape 21, cette actualisation pour une piste multi-récepteur donnée est réalisée par prédiction du vecteur d'état associé à cette piste à l'instant de mesure courant, à partir de l'estimation de l'état $\vec{x}_{k-1|k-1}$ pour la trame précédente fournie par le module de filtrage 63 et de la valeur de l'intervalle de temps 31 séparant la trame de plots courante de la trame précédente.

Un deuxième module 62 a pour fonction de réaliser l'association des pistes cartésiennes mono-récepteur 49 délivrée par l'étape 21 du procédé selon l'invention à des pistes cartésiennes multi-récepteurs existantes.

D'un point de vue fonctionnel, le mécanisme d'association consiste ici, de manière analogue au module 42, à projeter le vecteur d'état prédit, issu du module 61, associé à la piste cartésienne multi-récepteurs considérée (ainsi que la matrice de covariance de ce vecteur d'état) dans les bases bistatiques des plots constituant les pistes mono-récepteurs 49 candidates à l'association avec la piste multi-récepteur considérée. Le module 62 produit ainsi des associations plots bistatiques-pistes multi-recepteurs, les plots associés étant eux même constitutifs de pistes mono-récepteur formées durant l'étape 21. Selon l'invention, cette projection peut être réalisée par toute méthode connue, comme dans le cas du module 42.

Par réaliser l'association, on vérifie si, parmi les pistes cartésiennes mono-récepteur fournies par l'étape 21, il existe des pistes susceptibles de correspondre à des pistes cartésiennes multi-récepteurs de la façon suivante.

On procède tout d'abord à un test brut consistant principalement à vérifier qu'une piste cartésienne mono-récepteur candidate à l'association et la piste multi-récepteur considérée sont suffisamment proches l'une de l'autre pour procéder à des vérifications plus précises. Ce test brut comporte les vérifications suivantes:

- une vérification que l'écart de position dans un plan de référence des deux pistes considérée est inférieur à un seuil donné.
- une vérification que l'écart de vitesse dans un plan de référence des deux pistes considérée est inférieur à un seuil donné.

On procède ensuite à la projection des composantes du vecteur d'état et de la matrice de covariance associée sur la base bistatique de la piste mono-récepteur candidate à l'association à la piste multi-récepteur considérée. Cette association est par exemple réalisée par transformation non-parfumée, ou "unscented transformation" selon la terminologie anglo-saxonne.

On procède enfin à la vérification que les états projetés de la piste multi-récepteurs considérée sont compatibles des observations (des plots bistatiques) associées à la piste mono-récepteur candidate à l'association. Cette vérification est réalisée en tenant compte du bruit de mesure.

Par suite, si les vérifications sont positives, la piste cartésienne mono-récepteur candidate, ainsi que les plots bistatiques associés à cette piste, sont associés à la piste cartésienne multi-récepteurs considérée.

Il est à noter que le test d'association est réalisé non à partir de la piste mono-récepteur elle-même, dont l'existence n'est pas considérée comme parfaitement certaine, mais à partir des plots bistatiques constituant cette piste. De même le vecteur d'état de la piste mono-récepteur candidate n'est utilisé que pour le premier étage de test (vérification brute).

Un troisième module 63 a pour fonction de réaliser, pour chaque instant de mesure, l'association de plots multistatiques 411, 412 restés libres à l'issue de l'étape 21 du procédé selon l'invention, avec les ensembles pistes multi-récepteurs prédites-plots bistatiques associés constitués par le module 62.

Le traitement réalisé par ce module est similaire à celui réalisé par le module 42 de l'étape 21 pour l'association des plots bistatiques aux pistes cartésiennes mono-émetteur prédites, la différence principale résidant dans le fait qu'il comporte une boucle de calcul supplémentaire destinée à prendre en compte que les projections réalisées sont effectuées pour chaque récepteur, de façon à réaliser la projection de l'état prédit de la base multi-récepteurs considérée dans chaque base bistatique.

Le module 63 réalise ainsi des associations piste multi-récepteurs-plots bistatiques. En outre, à l'issue de sa mise en oeuvre, et dans le cas où le procédé selon l'invention comporte une étape préliminaire 23 de détection des faux plots, les plots non pistés 412 non utilisés sont définitivement éliminés.

Il peut arriver que pour la piste multi-récepteurs considérée des plots aient déjà été associés à certaines bases bistatiques avant le module 63. Cela peut arriver par exemple lorsqu'une ou plusieurs pistes mono-récepteur lui ont été associées lors du module 62. Dans ce cas, on interdit au module 63 de lui associer des plots pour les bases bistatiques déjà pourvues.

Un quatrième module 64 a pour fonction de vérifier le caractère convergent des pistes cartésiennes multi-récepteurs entretenues en détectant et éliminant les pistes prédites manifestement divergentes. Pour ce faire le module 64 met en oeuvre un traitement particulier dit "d'intersection" semblable à celui décrit dans le cas du module de traitement 43 de l'étape 21. De la même façon, si la probabilité liée à l'intersection déterminée est faible, c'est-à-dire inférieur à un seuil donné, la piste cartésienne multi-récepteurs associée aux plots bistatiques considérés est effacée et par suite non traitée par le module de filtrage 65 qui suit.

Il est à noter ici que, comme dans le cas du module 43, le test réalisé est particulièrement couteux en termes de quantité calculs, c'est-à-dire de temps. Par suite il n'est généralement pas possible, pour chaque instant de mesure, pour chaque nouvelle trame de plots, de réaliser ce test pour chacune des pistes existantes. Le test est donc réalisé pour chacune des pistes avec une périodicité qui tient compte du nombre de pistes entretenues, du nombre de pistes pouvant être testées entre deux arrivées successives de trames de plots bistatiques et du temps maximum acceptable séparant deux tests consécutifs d'une même piste, ce temps étant notamment fonction du caractère plus ou moins divergent du filtre de Kalman mis en oeuvre.

Un cinquième module de traitement 65 a pour fonction de déterminer, pour chaque piste cartésienne multi-récepteurs, à partir du vecteur d'état $\vec{x}_{k|k-1}$ et de la matrice de covariance $S_{k|k-1}$ prédits pour l'instant considéré, ainsi qu'à partir des plots bistatiques libres ou issus de pistes mono-récepteur associés à la piste multi-récepteurs considérée (vecteur d'observation $y_k^{obs}$ et covariance associée $\vec{R}_k^{obs}$), le vecteur d'état $\vec{x}_{k|k}$ et la matrice de covariance $S_{k|k}$ estimés pour la trame courante.

Selon l'invention cette opération est réalisée, de manière connue, par la mise en oeuvre d'un filtre de Kalman étendu.

Selon l'invention, le module 63 est implémenté de façon similaire au module 44 de l'étape 21.

Un sixième module 66 a pour fonction de réaliser la fusion des pistes cartésiennes jugées suffisamment proches pour être considérées comme correspondant à une seule et même piste. L'existence de telles pistes peut résulter de l'initialisation 68 de nouvelles pistes à partir des plots bistatiques pistés libres ou des pistes cartésiennes mono-récepteur n'ayant pas servi à l'entretien de pistes cartésiennes multi-récepteurs existantes. Elle peut encore résulter du caractère divergent du filtre de Kalman mis en oeuvre pour estimer les vecteurs d'états des pistes entretenues, ce caractère divergent se traduisant parfois par la création de nouvelles pistes présentant des positions et des vitesses très voisines et correspondant de manière très vraisemblable à un même objet.

Selon l'invention, le module 66, de manière analogue au module 45 de l'étape 21, est organisé en deux phases:

- une première phase consistant à déterminer les pistes présentant de fortes similarités
- une seconde phase consistant à tenter de fusionner les pistes considérées comme vraiment similaires.

la première phase comporte elle-même trois étapes identiques aux étapes 51, 52 et 53 de la première phase du module 45

Le module d'initialisation 68 a pour fonction de considérer l'ensemble des plots bistatiques et des pistes mono-récepteur qui n'ont pas été utilisés comme observations pour effectuer l'actualisation de pistes cartésiennes multi-récepteurs existantes. Dans le cas idéal, illustré par la figure 6, où le procédé comporte une étape 23, seuls les plots bistatiques pistés 411 sont utilisés dans ce module d'initialisation.

Ces plots et ces pistes sont associés au cours du temps, au fil des observations, de façon à déterminer si une association ne conduit pas à identifier une nouvelle piste multi-récepteurs dont ces plots libres et dont les plots associés à ces pistes mono-récepteurs constitueraient les observations. De la sorte, lorsqu'une nouvelle piste est identifiée, elle est intégrée à l'ensemble des pistes déjà existantes. Cette nouvelle piste est caractérisée par son vecteur d'état, sa matrice de covariance et les plots ayant conduit à son initialisation. En revanche, les plots bistatiques et les pistes mono-récepteur non utilisés par le module d'initialisation sont définitivement supprimés.

Selon l'invention ce module d'initialisation peut être réalisé comme le module 47 de l'étape 21 par tout procédé connu.

Un septième module 67 a pour fonction, comme le module 46 de l'étape 21, de détecter et de supprimer les pistes cartésiennes élémentaires ne correspondant vraisemblablement pas à une cible réelle. Pour procéder à cette détection, le module 67 met en oeuvre un traitement similaire à celui mis en oeuvre par le module 46 et compare dans un premier temps la vitesse de la piste rapportée au sol, avec un seuil de vitesse donné, et, si le test est positif, compare l'accélération de la piste avec un seuil d'accélération donné.

Par suite si une piste cartésienne multi-récepteurs ne satisfait pas l'un ou l'autre de ces tests elle est éliminée.

Le module 67 délivre ainsi pour chaque piste cartésienne multi-récepteurs entretenue jugée valide, une estimation de cette piste, c'est à dire une estimation pour la trame de plots considérée du vecteur d'état caractérisant la piste considérée ainsi que de la matrice de covariance associée à ce vecteur.

Ces informations 611 sont utilisées par le module 61 pour produire une estimation de l'état de la piste à l'instant d'observation suivant. Elles sont également délivrées à la suite du traitement situé en aval du procédé selon l'invention, accompagnées notamment, pour chaque piste multi-récepteur ainsi formée et entretenue, de l'ensemble des plots bistatiques et de leurs attributs ayant servi à constituer cette piste, ainsi que de l'identification, du numéro, des pistes mono-récepteur ayant été associées à cette piste.

Il est à noter que, dans une forme de mise en oeuvre préférée, du procédé selon l'invention, l'étape 22 comporte encore un module intermédiaire 69, dont la fonction est de vérifier comme le module 48 de l'étape 21 si les pistes cartésiennes mises a jour en sortie du module 65 présentent un caractère de divergence manifeste. Ce module complémentaire est implémenté de façon similaire au module 48 en considérant un plan de projection de référence, le plan de positionnement de la base considérée par exemple, et un seuil inférieur et un seuil supérieur d'altitude. Dans les deux cas extrêmes (altitude trop faible ou trop élevée) définis précédemment toutes les mesures des grandeurs dérivées de l'altitude, la vitesse de montée en particulier, sont mises à zéro et leurs matrices de covariance réinitialisées. En revanche en dehors de ces deux cas le module 48 laisse le vecteur d'état de la piste considéré, et la matrice de covariance associée, inchangés.

Il est à noter en outre que, dans une forme de mise en oeuvre également préférée, l'étape 22 comporte également un module de traitement 612 dont la fonction est de réaliser, avant prédiction, une pré-actualisation des pistes multi-récepteurs existantes au moyen des plots formant la trame courante. Ce module consiste à considérer dans un premier temps, pour chaque piste multi-récepteurs, les pistes mono-récepteur lui ayant préalablement été associées pour la trames de plots précédente soit pour actualiser la piste considérée soit pour participer à l'initialisation de cette piste. Dès lors, les plots attachés aux pistes mono-récepteur sont automatiquement associés aux pistes multi-récepteurs concernées. Ces plots seront utilisés ultérieurement dans le module de traitement 65 effectuant la mise à jour des vecteurs d'état des pistes multi-récepteurs.

Il est à noter que dans cette variante de mise en oeuvre de l'invention, dans la mesure où les numéros d'identifications des pistes mono-récepteur ayant été utilisées pour initialiser une piste multi-récepteur donnée sont mémorisés, le module 612 ne contrôle pas le bien fondé de ces associations et que seules les pistes mémorisées sont prises en considération dans ce module. Les autres pistes mono-récepteur sont quant à elles, transmises directement au module d'association 62.

**Revendications**

**1.** Procédé de traitement de données pour système radar multistatique comportant une pluralité d'émetteurs et de récepteurs chaque récepteur pouvant être associé à un ou plusieurs émetteurs pour former une ou plusieurs bases bistatiques, chaque récepteur produisant, à des dates successives, des trames successives de plots bistatiques, le procédé élaborant et entretenant des pistes cartésiennes multi-récepteurs à partir des plots bistatiques élaborés par les différents récepteurs, **caractérisé en ce qu'**il comporte:

- une première étape de traitement (21) durant laquelle il élabore et entretient des pistes cartésiennes mono-récepteur chaque piste cartésienne mono-récepteur étant constituée à partir de plots formés par un récepteur donné du système radar multistatique;
- une seconde étape de traitement (22) durant laquelle il élabore et entretient des pistes cartésiennes multi-récepteurs chaque piste cartésienne multi-récepteurs étant issue de la fusion de pistes cartésienne mono-récepteurs et étant constituée des plots bistatiques constituant les pistes cartésiennes mono-récepteur fusionnées, avec des plots bistatiques n'ayant pas été utilisés lors de la première étape de traitement (21) pour constituer une piste cartésienne mono-récepteur;

les pistes cartésiennes mono-récepteur et multi-récepteurs ainsi élaborées étant actualisées au fur et à mesure de la production des trames de plots par les différents récepteurs; les pistes élaborées, **caractérisées par** un vecteur d'état, une matrice de covariance associée à ce vecteur et la listes des plots bistatiques ayant contribué à leur formation et à leur entretien, étant transmises aux moyens de traitement opérant en aval du procédé.

**2.** Procédé selon la revendication 1, **caractérisé en ce que** la première étape de traitement (21) traite les plots bistatiques produits par chaque récepteur et applique à ces plots un pistage mono-récepteur (27) mettant en oeuvre les modules de traitement suivants:

- un module de prédiction (41) qui détermine l'état prédit de la piste cartésienne mono-récepteur considérée à la date correspondant à la trame de plots bistatiques disponible k, l'état prédit étant défini par un vecteur $\vec{x}_{k|k-1}$ d'état et une matrice de covariance $S_{k|k-1}$ associée à ce vecteur;
- un module d'association (42) identifiant les plots d'une trame de plots bistatiques k donnée pouvant être associés à une piste cartésienne mono-récepteur donnée, compte tenu son état prédit $\vec{x}_{k|k-1}$, et être utilisés pour actualiser l'état de la piste cartésienne mono-récepteur considérée;
- un module de test (43) de la divergence des pistes cartésiennes mono-récepteur entretenues, la divergence d'une piste cartésienne caractérisant la vraisemblance de cette piste par rapport aux caractéristiques cinématiques des cibles détectée;
- un module de filtrage (44) réalisant pour chaque piste cartésienne mono-récepteur existante et pour une trame de plots bistatiques k donnée, l'estimation $\vec{x}_{k|k}$ du vecteur d'état réel de chaque piste, cette estimation étant réalisée à partir du vecteur d'état prédit de la piste $\vec{x}_{k|k-1}$ et des plots bistatiques de la trame k associés à celle-ci;
- un module (47) d'initialisation de pistes cartésiennes mono-récepteur, l'initialisation étant réalisée par association de plots bistatiques (32, 33) n'ayant pas été associés à une piste cartésienne mono-récepteur existante;
- un module (45) de fusion de pistes cartésiennes, réalisant, pour le récepteur considéré, l'élaboration d'une piste cartésienne mono-récepteur, unique à partir de pistes cartésiennes mono-récepteur existantes présentant des similitudes,
- un module de contrôle (46) vérifiant pour chaque piste cartésienne mono-récepteur la vraisemblance de l'estimation du vecteur d'état estimé $\vec{x}_{k|k}$ caractérisant la piste cartésienne mono-récepteur considérée.

L'état $\vec{x}_{k|k}$, estimé pour chaque piste cartésienne mono-récepteur, étant utilisé par le module de prédiction pour construire le vecteur d'état prédit, $x_{k+1|k}$, de la piste destiné à être associé aux plots bistatiques constituant la trame de plots bistatiques suivante k+1.

**3.** Procédé selon la revendication 2, **caractérisé en ce que** le module de test (43) de la divergence des pistes cartésiennes mono-récepteur entretenues de la première étape de traitement (21) met en oeuvre un traitement qui considère un nombre maximum N de tests pouvant être réalisés pour une même trame n donnée et un nombre maximum P de trames séparant deux tests consécutifs d'une même piste cartésienne, et qui réalise le test d'une nouvelle piste cartésienne formée pour une trame n donnée aussitôt que possible à partir de l'apparition de la trame n+P.

**4.** Procédé selon l'une quelconque des revendications 2 ou 3, **caractérisé en ce que** le module de fusion de pistes cartésiennes (45) de la première étape de traitement (21) met en oeuvre un traitement de fusion de pistes cartésiennes qui considère les pistes cartésiennes deux à deux, ce traitement comportant deux phases:

- une première phase consistant à déterminer si les pistes cartésiennes considérées présentent de fortes similarités;
- une seconde phase consistant à tenter de fusionner les pistes cartésiennes en question si elles sont considérées comme similaires.

**5.** Procédé selon l'une quelconque des revendications précédentes, **caractérisé en ce que**, la seconde étape de traitement (22) traitant simultanément tous les plots bistatiques produits par les différents récepteurs constituant le système radar multistatique, ces plots constituant une trame de plots bistatiques multi-récepteurs k, elle met en oeuvre les modules de traitement suivants:

- un module de prédiction (61) qui détermine l'état prédit de la piste cartésienne multi-récepteurs considérée à la date correspondant à la trame de plots disponible k, l'état prédit étant défini par un vecteur $\vec{x}_{k|k-1}$ d'état et une matrice de covariance $S_{k|k-1}$ associée à ce vecteur;
- un premier module d'association (62) identifiant les pistes cartésiennes mono-récepteur pouvant être associées, pour une trame de plots bistatiques k donnée, à une piste cartésienne multi-récepteurs donnée, compte tenu de l'état prédit $\vec{x}_{k|k-1}$, les plots bistatiques associés à ces pistes cartésiennes mono-récepteur pouvant être utilisés pour actualiser l'état de la piste cartésienne multi-récepteurs considérée;
- un second module d'association (63) identifiant les plots bistatiques d'une trame de plots bistatiques k donnée qui n'ont pas été associés à des pistes mono-récepteur lors de la première étape de traitement (21) et qui peuvent être associés à une piste cartésienne multi-récepteurs donné, compte tenu son état prédit $\vec{x}_{k|k-1}$, et être utilisés pour actualiser l'état de la piste considérée;
- un module (64) de test de la divergence des pistes cartésiennes multi-récepteurs entretenues, la divergence d'une piste caractérisant la vraisemblance de cette piste par rapport aux caractéristiques cinématiques des cibles détectée;
- un module de filtrage (65) réalisant pour chaque piste cartésienne multi-récepteurs existante et pour une trame de plots bistatiques multi-récepteurs k donnée, l'estimation $\vec{x}_{k|k}$ du vecteur d'état réel de chaque piste, cette estimation étant réalisée à partir du vecteur d'état prédit de la piste $\vec{x}_{k|k-1}$ et des plots bistatiques de la trame k associés à celle-ci;
- un module (68) d'initialisation de pistes cartésiennes multi-récepteur, l'initialisation étant réalisée par association de plots bistatiques (411, 412) n'ayant pas été associés à une piste cartésienne mono-récepteur existante lors de la première étape de traitement (21) et des plots bistatiques associés à des pistes cartésiennes mono-récepteur lors de la première étape de traitement (21), ces pistes cartésiennes mono-récepteur n'étant associées à aucune piste cartésienne multi-récepteurs par le premier module d'association (62);
- un module (66) de fusion de pistes cartésiennes multi-récepteurs, réalisant l'élaboration d'une piste cartésienne multi-récepteurs unique à partir de pistes cartésiennes multi-récepteurs existantes présentant des similitudes,
- un module de contrôle (67) vérifiant pour chaque piste cartésienne multi-récepteur la vraisemblance de l'estimation du vecteur d'état estimé $\vec{x}_{k|k}$ caractérisant cette piste.

L'état estimé pour chaque piste $\vec{x}_{k|k}$ étant utilisé par le module de prédiction (61) pour construire le vecteur d'état prédit de la piste $\vec{x}_{k+1|k}$ destiné à être associé aux plots bistatiques constituant la trame de plots bistatiques multi-récepteurs suivante k+1.

**6.** Procédé selon la revendication 5, **caractérisé en ce que** le module de test (64) de la divergence des pistes cartésiennes multi-récepteurs entretenues de la seconde étape de traitement (22) met en oeuvre un traitement qui considère un nombre maximum N de tests pouvant être réalisés pour une même trame n donnée et un nombre maximum P de trames séparant deux tests consécutifs d'une même piste cartésienne, et qui réalise le test d'une nouvelle piste cartésienne formée pour une trame n donnée aussitôt que possible à partir de l'apparition de la trame n+P.

**7.** Procédé selon l'une quelconque des revendications 5 ou 6, **caractérisé en ce que** le module de fusion de pistes cartésiennes (66) de la seconde étape de traitement (22) met en oeuvre un traitement de fusion de pistes cartésiennes identique à celui mis en oeuvre par le module de fusion de pistes cartésiennes (45) de la première étape de traitement (21).

**8.** Procédé selon l'une des revendications 4 ou 7, **caractérisé en ce que** la première phase du traitement de fusion de pistes cartésiennes comporte:

- une première étape (51) pour déterminer si certaines pistes cartésiennes paraissent suffisamment proches.
- une deuxième étape (52) pour déterminer pour deux pistes cartésiennes A et B données si le vecteur d'état et la matrices de covariance de la piste cartésienne A sont compatibles des mesures relatives à la piste cartésienne B;
- une troisième étape (53) pour déterminer pour les deux mêmes pistes cartésiennes A et B si le vecteur d'état et la matrice de covariance de la piste cartésienne B sont compatibles des mesures relatives à la piste cartésienne A;

les pistes cartésiennes A et B formant une piste cartésienne fusionnée si l'ensemble des tests effectués au cours des trois étapes (51, 52, 53) est positif.

**9.** Procédé selon la revendication 8, **caractérisé en ce que** la deuxième étape (52) de la première phase du traitement de fusion de pistes cartésiennes comporte:

- une première opération (521) consistant à projeter le vecteur d'état et la matrice de covariance d'une première piste cartésienne A dans les différents repères bistatiques d'une seconde piste cartésienne B;
- une seconde opération (522) consistant à vérifier que le vecteur d'état de la piste cartésienne A projeté dans les différents repères bistatiques de la piste cartésienne B est compatible de l'observation associée à la piste B pour la trame de plots k considérée; la vérification étant réalisée en tenant compte du bruit pouvant affecter les mesures;

la troisième étape (53) de la première phase du traitement de fusion de pistes cartésiennes reproduisant un traitement identique à la deuxième étape (52) de cette première phase en intervertissant les rôles joués par les pistes cartésiennes A et B.

**10.** Procédé selon la revendication 9, **caractérisé en ce que** la seconde opération (522) de la deuxième étape (52) de la première phase du traitement de fusion de pistes cartésiennes réalise, pour la piste cartésienne A et pour chaque base bistatique ayant servi à mettre à jour l'état de la piste cartésienne B, les vérifications suivantes:

- l'écart en distance bistatique entre l'observation attachée à la piste cartésienne B et la projection de l'état de la piste cartésienne A dans la base considérée est inférieur à une première valeur donnée.
- l'écart en vitesse bistatique entre l'observation attachée à la piste cartésienne B et la projection de l'état de la piste cartésienne A dans la base considérée est inférieur à une deuxième valeur donnée.
- l'écart en azimut entre l'observation attachée à la piste cartésienne B et la projection de l'état de la piste cartésienne A dans la base considérée est inférieur à une valeur troisième donnée;

la seconde opération (532) de la troisième étape (53) de la première phase du traitement de fusion de pistes cartésiennes réalisant, pour la piste cartésienne B et pour chaque base bistatique ayant servi à mettre à jour l'état de la piste cartésienne A les mêmes vérifications que la seconde opération (522) de la deuxième étape (52) de la première phase du traitement de fusion de pistes cartésiennes.

**11.** Procédé selon l'une des revendications 8 à 10, **caractérisé en ce que** le traitement de fusion de pistes cartésiennes mets en oeuvre des opérations complémentaires (541, 542, 543) permettant de prendre en compte l'âge des pistes cartésiennes A et B considérées et de comparer l'âge de ces pistes à un âge minimum, et selon les résultats des comparaisons:

- de n'effectuer ni la deuxième étape (52), ni la troisième étape (53) de la première phase du module de fusion de pistes cartésiennes (45);

- d'effectuer seulement la deuxième étape (52);
- d'effectuer seulement la troisième étape (53);
- d'effectuer la deuxième étape (52) et la troisième étape (53).

12. Procédé selon l'une quelconque des revendications précédentes, **caractérisé en ce que** le traitement (27), mis en oeuvre par la première étape de traitement (21) de formation de pistes cartésiennes mono-récepteur, comporte encore un module intermédiaire (48), qui vérifie si les pistes cartésiennes mises à jour par le module de filtrage (44) présentent un caractère de divergence manifeste pour lequel les données cinématiques dans l'espace cartésien extraites de la piste cartésienne considérée ne correspondent pas au type de cible considéré.

13. Procédé selon l'une quelconque des revendications précédentes, **caractérisé en ce que** le traitement, mis en oeuvre par la seconde étape de traitement (22), de formation de pistes cartésiennes multi-récepteurs, comporte encore un module intermédiaire (69), qui vérifie si les pistes cartésiennes mises à jour par le module de filtrage (65) présentent un caractère de divergence manifeste pour lequel les données cinématiques dans l'espace cartésien extraites de la piste cartésienne considérée ne correspondent pas au type de cible considéré.

14. Procédé selon l'une des revendications 3 ou 6, **caractérisé en ce que** les modules de test (43, 64) de la divergence des pistes cartésiennes entretenues réalise le test d'une piste cartésienne donnée si la matrice de covariance $S_{k+1|k}$ de l'état prédit de la piste considérée remplit la condition de seuil suivante:

$$\det\left(S_{k+1|\,k}\right) \geq \mathrm{MaxDet}$$

dans laquelle MaxDet représente un seuil donné.

15. Procédé selon l'une des revendications 5 à 14, **caractérisé en ce que** la seconde étape de traitement (22) comporte un module complémentaire (612) qui réalise, avant association des pistes cartésiennes mono-récepteur formées aux pistes cartésiennes multi-récepteurs existantes, la pré-actualisation étant réalisée au moyen des plots formant la trame courante de plots bistatiques multi-récepteurs k, ce module consistant à considérer pour chaque piste cartésienne multi-récepteurs, les pistes cartésiennes mono-récepteur lui ayant préalablement été associées pour la trames de plots multi-récepteurs précédente k-1 et à associer à l'estimation (614) de la piste cartésienne multi-récepteurs considérée les plots bistatiques attachés à ces pistes cartésiennes mono-récepteur (49).

16. Procédé selon l'une des revendications précédentes, **caractérisé en ce qu'**il comporte une étape de traitement préliminaire (23) consistant à réaliser un pistage bistatique des plots bistatiques produits par les différents récepteurs constituant le système radar multistatique et à attribuer à chacun des plots constituant une trame de plots bistatique k, un indicateur binaire indiquant si le plot considéré est associé ou non à une piste bistatique.

17. Procédé selon l'une des revendications 2 à 16, **caractérisé en ce que** le module d'initialisation de pistes cartésiennes mono-récepteur (47) initialise de nouvelles pistes cartésiennes à partir des plots bistatiques (32) ayant été utilisés pour former des pistes bistatiques lors de l'étape préliminaire de traitement (23).

18. Procédé selon l'une quelconque des revendications 5 à 16, **caractérisé en ce que** le module d'initialisation de pistes cartésiennes multi-récepteurs (68) initialise de nouvelles pistes cartésiennes à partir des plots bistatiques (411) ayant été utilisés pour former des pistes bistatiques lors de l'étape préliminaire de traitement (23).

19. Procédé selon l'une des revendications 2 à 18, **caractérisé en ce que** le module d'association des plots bistatiques aux pistes cartésiennes (42) de la première étape de traitement (21) utilise un seuil d'association γ qui diffère suivant que le plot considéré est associé ou non à une piste bistatique.

20. Procédé selon l'une des revendications 5 à 19, **caractérisé en ce que** le module d'association des plots bistatiques aux pistes cartésiennes (63) de la seconde étape de traitement (22) utilise un seuil d'association γ qui diffère suivant que le plot considéré est associé ou non à une piste bistatique.

21. Procédé selon l'une des revendications précédentes, **caractérisé en ce qu'**il met en oeuvre un traitement préliminaire pour identifier pour chaque plot les émetteurs dont il ne peut manifestement pas être issu.

**EP 2 473 867 B1**

**Patentansprüche**

1. Verfahren für die Verarbeitung von Daten für ein multistatisches Radarsystem, das eine Vielzahl von Sendern und von Empfängern aufweist, wobei jeder Empfänger einem oder mehreren Sendern zuordenbar ist, um eine oder mehrere bistatische Basen zu bilden, wobei jeder Empfänger zu aufeinanderfolgenden Zeitpunkten aufeinanderfolgende Raster bistatischer Plots produziert, wobei das Verfahren aus bistatischen Plots, die von den verschiedenen Empfängern gebildet wurden, cartesianische Bahnen mit mehreren Empfängern bildet und aufrechterhält, **dadurch gekennzeichnet, dass** es aufweist:

   - einen ersten Verarbeitungsschritt (21), bei dem es cartesianische Bahnen mit einem Empfänger bildet und aufrechterhält, wobei jede cartesianische Bahn mit einem Empfänger aus Plots besteht, die von einem bestimmten Empfänger des multistatischen Radarsystems gebildet sind,
   - einen zweiten Verarbeitungsschritt (22), bei dem es cartesianische Bahnen mit mehreren Empfängern bildet und aufrechterhält, wobei jede cartesianische Bahn mit mehreren Empfängern aus der Fusion cartesianischer Bahnen mit einem Empfänger hervorgegangen ist und aus bistatischen Plots besteht, die die mit bistatischen Plots, die während des ersten Verarbeitungsschritts (21) nicht verwendet wurden, um eine cartesianische Bahn mit einem Empfänger zu bilden, fusionierten cartesianischen Bahnen mit einem Empfänger bilden,

   wobei die derart gebildeten cartesianischen Bahnen mit einem Empfänger und mit mehreren Empfängern nach und nach mit der Produktion von Plotrastern durch die verschiedenen Empfänger aktualisiert werden, wobei die gebildeten Bahnen, die durch einen Zustandsvektor, eine diesem Vektor zugeordnete Kovarianzmatrix und die Liste der bistatischen Plots, die zu ihrer Bildung und Aufrechterhaltung beigetragen haben, gekennzeichnet sind, an die Verarbeitungsmittel weitergeleitet werden, die dem Verfahren nachgelagert operieren.

2. Verfahren nach Anspruch 1, **dadurch gekennzeichnet, dass** der erste Verarbeitungsschritt (21) die bistatischen Plots verarbeitet, die von jedem Empfänger produziert wurden und auf diese Plots eine Bebahnung mit einem Empfänger (27) anwendet, wobei die folgenden Verarbeitungsmodule umgesetzt werden:

   - ein Prognosemodul (41), das den Prognosezustand der cartesianischen Bahn mit einem Empfänger bestimmt, die zu dem Zeitpunkt berücksichtigt wird, der dem verfügbaren Raster bistatischer Plots k entspricht, wobei der Prognosezustand von einem Zustandsvektor $\vec{x}_{k|k-1}$ und einer diesem Vektor zugeordneten Kovarianzmatrix $S_{k|k-1}$ definiert ist,
   - ein Zuordnungsmodul (42), das die Plots eines bestimmten Rasters bistatischer Plots k, die einer bestimmten cartesianischen Bahn mit einem Empfänger zuordenbar sind, unter Berücksichtigung ihres Prognosezustands $\vec{x}_{k|k-1}$ identifiziert, und verwendbar sind, um den Zustand der entsprechenden cartesianischen Bahn mit einem Empfänger zu aktualisieren,
   - ein Testmodul (43) der Divergenz der aufrechterhaltenen cartesianischen Bahnen mit einem Empfänger, wobei die Divergenz einer cartesianischen Bahn die Wahrscheinlichkeit dieser Bahn im Verhältnis zu den kinematischen Merkmalen der erfassten Ziele kennzeichnet,
   - ein Filtermodul (44), das für jede vorhandene cartesianische Bahn mit einem Empfänger und für ein bestimmtes Raster bistatischer Plots k die Schätzung $\vec{x}_{k|k}$ des tatsächlichen Zustandsvektors jeder Bahn durchführt, wobei diese Schätzung auf der Basis des prognostizierten Zustandsvektors der Bahn $\vec{x}_{k|k-1}$ und der bistatischen Plots des Rasters k, die diesem zugeordnet sind, durchgeführt wird,
   - ein Initialisierungsmodul (47) cartesianischer Bahnen mit einem Empfänger, wobei die Initialisierung durch Zuordnung bistatischer Plots (32, 33) durchgeführt wird, die keiner vorhandenen cartesianischen Bahn mit einem Empfänger zugeordnet wurden,
   - ein Fusionsmodul (45) cartesianischer Bahnen, das für den entsprechenden Empfänger die Bildung einer einzigen cartesianischen Bahn mit einem Empfänger aus vorhandenen cartesianischen Bahnen mit einem Empfänger, die Ähnlichkeiten aufweisen, durchführt,
   - ein Kontrollmodul (46), das für jede cartesianische Bahn mit einem Empfänger die Wahrscheinlichkeit der Schätzung des geschätzten Zustandsvektors $\vec{x}_{k|k}$ überprüft, der die entsprechende cartesianische Bahn mit einem Empfänger kennzeichnet,

   wobei der für jede cartesianische Bahn mit einem Empfänger geschätzte Zustand $\vec{x}_{k|k}$ von dem Prognosemodul verwendet wird, um den prognostizierten Zustandsvektor $\vec{x}_{k+1|k}$ der Bahn zu konstruieren, der dazu bestimmt ist, den bistatischen Plots zugeordnet zu sein, die das folgende Raster bistatischer Plots k+1 bilden.

3. Verfahren nach Anspruch 2, **dadurch gekennzeichnet, dass** das Testmodul (43) der Divergenz der cartesianischen Bahnen mit einem Empfänger, die vom ersten Verarbeitungsschritt (21) aufrechterhalten werden, eine Verarbeitung umsetzt, bei der eine maximale Anzahl N von Tests berücksichtigt wird, die für ein bestimmtes selbes Raster n und eine maximale Anzahl P an Rastern durchführbar ist, wobei zwei aufeinanderfolgende Tests einer selben cartesianischen Bahn getrennt sind, und die den Test einer neuen cartesianischen Bahn, die für ein bestimmtes Raster n gebildet wurde, so früh wie möglich ab dem Vorkommen des Rasters n+P durchführt.

4. Verfahren nach einem der Ansprüche 2 oder 3, **dadurch gekennzeichnet, dass** das Fusionsmodul cartesianischer Bahnen (45) des ersten Verarbeitungsschritts (21) eine Fusionsverarbeitung cartesianischer Bahnen umsetzt, die die cartesianischen Bahnen paarweise betrachtet, wobei diese Verarbeitung zwei Phasen aufweist:

- eine erste Phase, die darin besteht zu bestimmen, ob die betrachteten cartesianischen Bahnen starke Ähnlichkeiten aufweisen,
- eine zweite Phase, die darin besteht zu versuchen, die in Frage kommenden cartesianischen Bahnen zu fusionieren, wenn sie als ähnlich betrachtet werden.

5. Verfahren nach einem der vorangehenden Ansprüche, **dadurch gekennzeichnet, dass** der zweite Verarbeitungsschritt (22), der gleichzeitig alle bistatischen Plots verarbeitet, die von den verschiedenen Empfängern produziert werden, die das multistatische Radarsystem bilden, wobei diese Plots ein Raster bistatischer Plots mit mehreren Empfängern k bilden, die folgenden Verarbeitungsmodule umsetzt:

- ein Prognosemodul (61), das den Prognosezustand der cartesianischen Bahn mit mehreren Empfängern bestimmt, die zu dem Zeitpunkt betrachtet wird, der dem verfügbaren Raster bistatischer Plots k entspricht, wobei der Prognosezustand von einem Zustandsvektor $\vec{x}_{k|k-1}$ und einer diesem Vektor zugeordneten Kovarianzmatrix $S_{k|k-1}$, definiert ist,
- ein erstes Zuordnungsmodul (62), das die cartesianischen Bahnen mit einem Empfänger identifiziert, die für ein bestimmtes Raster bistatischer Plots k einer bestimmten cartesianischen Bahn mit mehreren Empfängern unter Berücksichtigung des Prognosezustands $\vec{x}_{k|k-1}$ zuordenbar sind, wobei die diesen cartesianischen Bahnen mit einem Empfänger zugeordneten bistatischen Plots verwendbar sind, um den Zustand der entsprechenden cartesianischen Bahn mit mehreren Empfängern zu aktualisieren,
- ein zweites Zuordnungsmodul (63), das die bistatischen Plots eines bestimmten Rasters bistatischer Plots k identifiziert, die während des ersten Verarbeitungsschritts (21) keinen Bahnen mit einem Empfänger zugeordnet wurden und die einer bestimmten cartesianischen Bahn mit mehreren Empfängern unter Berücksichtigung ihres Prognosezustands $\vec{x}_{k|k-1}$ zuordenbar sind und verwendbar sind, um den Zustand der entsprechenden Bahn zu aktualisieren,
- ein Testmodul (64) der Divergenz der aufrechterhaltenen cartesianischen Bahnen mit mehreren Empfängern, wobei die Divergenz einer cartesianischen Bahn die Wahrscheinlichkeit dieser Bahn im Verhältnis zu den kinematischen Merkmalen der erfassten Ziele kennzeichnet,
- ein Filtermodul (65), das für jede vorhandene cartesianische Bahn mit mehreren Empfängern und für ein bestimmtes Raster bistatischer Plots k die Schätzung $\vec{x}_{k|k}$ des tatsächlichen Zustandsvektors jeder Bahn durchführt, wobei diese Schätzung auf der Basis des prognostizierten Zustandsvektors der Bahn $\vec{x}_{k|k-1}$ und der bistatischen Plots des Rasters k, die diesem zugeordnet sind, durchgeführt wird,
- ein Initialisierungsmodul (68) cartesianischer Bahnen mit mehreren Empfängern, wobei die Initialisierung durch Zuordnung bistatischer Plots (411, 412) erfolgt, die beim ersten Verarbeitungsschritt (21) keiner vorhandenen cartesianischen Bahn mit einem Empfänger zugeordnet wurden und der Plots, die beim ersten Verarbeitungsschritt (21) cartesianischen Bahnen mit einem Empfänger zugeordnet wurden, wobei diese cartesianischen Bahnen mit einem Empfänger vom ersten Zuordnungsmodul (62) keiner cartesianischen Bahn mit mehreren Empfängern zugeordnet wurden,
- ein Fusionsmodul (66) cartesianischer Bahnen mit mehreren Empfängern, das aus vorhandenen cartesianischen Bahnen mit mehreren Empfängern, die Ähnlichkeiten aufweisen, eine einzige cartesianische Bahn mit mehreren Empfängern bildet,
- ein Kontrollmodul (67), das für jede cartesianische Bahn mit mehreren Empfängern die Wahrscheinlichkeit der Schätzung des geschätzten Zustandsvektors $\vec{x}_{k|k}$ überprüft, der diese Bahn kennzeichnet,

wobei der für jede Bahn $\vec{x}_{k|k}$ geschätzte Zustand vom Prognosemodul (61) verwendet wird, um den prognostizierten Zustandsvektor der Bahn $\vec{x}_{k+1|k}$ zu konstruieren, der dazu bestimmt ist, den bistatischen Plots zugeordnet zu sein, die das folgende Raster bistatischer Plots mit mehreren Empfängern k+1 bilden.

6. Verfahren nach Anspruch 5, **dadurch gekennzeichnet, dass** das Testmodul (64) der Divergenz der cartesianischen Bahnen mit mehreren Empfängern, die vom zweiten Verarbeitungsschritt (22) aufrechterhalten werden, eine Verarbeitung umsetzt, bei der eine maximale Anzahl N von Tests betrachtet wird, die für ein bestimmtes selbes Raster n und eine maximale Anzahl P an Rastern durchführbar ist, wobei zwei aufeinanderfolgende Tests einer selben cartesianischen Bahn getrennt sind, und die den Test einer neuen cartesianischen Bahn, die für ein bestimmtes Raster n gebildet wurde, so früh wie möglich ab dem Vorkommen des Rasters n+P durchführt.

7. Verfahren nach einem der Ansprüche 5 oder 6, **dadurch gekennzeichnet, dass** das Fusionsmodul cartesianischer Bahnen (66) des zweiten Verarbeitungsschritts (22) eine Fusionsverarbeitung cartesianischer Bahnen umsetzt, die der entspricht, die vom Fusionsmodul cartesianischer Bahnen (45) des ersten Verarbeitungsschritts (21) umgesetzt wird.

8. Verfahren nach einem der Ansprüche 4 oder 7, **dadurch gekennzeichnet, dass** die erste Phase der Fusionsverarbeitung cartesianischer Bahnen aufweist:

   - einen ersten Schritt (51), um zu bestimmen, ob bestimmte cartesianische Bahnen ausreichend nah sind,
   - einen zweiten Schritt (52), um für zwei bestimmte cartesianische Bahnen A und B zu bestimmen, ob der Zustandsvektor und die Kovarianzmatrix der cartesianischen Bahn A mit den Messungen kompatibel sind, die sich auf die Bahn B beziehen,
   - einen dritten Schritt (53), um für die zwei selben cartesianischen Bahnen A und B zu bestimmen, ob der Zustandsvektor und die Kovarianzmatrix der cartesianischen Bahn B mit den Messungen kompatibel sind, die sich auf die cartesianische Bahn A beziehen,

   wobei die cartesianischen Bahnen A und B eine fusionierte cartesianische Bahn bilden, wenn alle Tests, die während der drei Schritte (51, 52, 53) durchgeführt wurden, positiv sind.

9. Verfahren nach Anspruch 8, **dadurch gekennzeichnet, dass** der zweite Schritt (52) der ersten Phase der Fusionsverarbeitung cartesianischer Bahnen aufweist:

   - eine erste Operation (521), die in der Projektion des Zustandsvektors und der Kovarianzmatrix einer ersten cartesianischen Bahn A in die verschiedenen bistatischen Bezugspunkte einer zweiten cartesianischen Bahn B besteht,
   - eine zweite Operation (522), die darin besteht zu überprüfen, dass der in die verschiedenen Bezugspunkte der cartesianischen Bahn B projizierte Zustandsvektor der cartesianischen Bahn A mit der Beobachtung kompatibel ist, die der Bahn B für das entsprechende Plotraster k zugeordnet ist, wobei die Überprüfung unter Berücksichtigung des Rauschens durchgeführt wird, das die Messungen beeinträchtigen könnte,

   wobei der dritte Schritt (53) der ersten Phase der Fusionsverarbeitung cartesianischer Bahnen eine zum zweiten Schritt (52) dieser ersten Phase identische Verarbeitung durch Umkehr der Rollen reproduziert, die von den cartesianischen Bahnen A und B gespielt werden.

10. Verfahren nach Anspruch 9, **dadurch gekennzeichnet, dass** die zweite Operation (522) des zweiten Schritts (52) der ersten Phase der Fusionsverarbeitung cartesianischer Bahnen für die cartesianische Bahn A und für jede bistatische Basis, die zur Aktualisierung des Zustands der cartesianischen Bahn B gedient hat, die folgenden Überprüfungen durchführt:

   - der bistatische Distanzabstand zwischen der der cartesianischen Bahn B zugeordneten Beobachtung und der Projektion des Zustands der cartesianischen Bahn A in die entsprechende Basis ist kleiner als ein erster vorgegebener Wert,
   - der bistatische Geschwindigkeitsabstand zwischen der der cartesianischen Bahn B zugeordneten Beobachtung und der Projektion des Zustands der cartesianischen Bahn A in die entsprechende Basis ist kleiner als ein zweiter vorgegebener Wert,
   - der Azimutabstand zwischen der der cartesianischen Bahn B zugeordneten Beobachtung und der Projektion des Zustands der cartesianischen Bahn A in die entsprechende Basis ist kleiner als ein dritter vorgegebener Wert,

   wobei die zweite Operation (532) des dritten Schritts (53) der ersten Phase der Fusionsverarbeitung cartesianischer Bahnen für die cartesianische Bahn B und für jede bistatische Basis, die zur Aktualisierung des Zustands der cartesianischen Bahn A gedient hat, dieselben Überprüfungen wie die zweite Operation (522) des zweiten Schritts (52) der ersten Phase der Fusionsverarbeitung cartesianischer Bahnen durchführt.

11. Verfahren nach einem der Ansprüche 8 bis 10, **dadurch gekennzeichnet, dass** die Fusionsverarbeitung cartesianischer Bahnen komplementäre Operationen (541, 542, 543) umsetzt, die es erlauben, das Alter der entsprechenden cartesianischen Bahnen A und B zu berücksichtigen und das Alter dieser Bahnen mit einem Mindestalter zu vergleichen, und je nach den Ergebnissen der Vergleiche:

- weder den zweiten Schritt (52) noch den dritten Schritt (53) der ersten Phase des Fusionsmoduls cartesianischer Bahnen (45) durchzuführen,
- nur den zweiten Schritt (52) durchzuführen,
- nur den dritten Schritt (53) durchzuführen,
- den zweiten Schritt (52) und den dritten Schritt (53) durchzuführen.

12. Verfahren nach einem der vorangehenden Ansprüche, **dadurch gekennzeichnet, dass** die Verarbeitung (27), die vom ersten Verarbeitungsschritt (21) der Bildung cartesianischer Bahnen mit einem Empfänger umgesetzt wird, weiterhin ein Zwischenmodul (48) aufweist, das überprüft, ob die vom Filtermodul (44) aktualisierten cartesianischen Bahnen einen offensichtlichen Divergenzcharakter aufweisen, für den die kinematischen Daten im cartesianischen Raum, die aus der betrachteten cartesianischen Bahn extrahiert wurden, nicht dem Typ des betrachteten Ziels entsprechen.

13. Verfahren nach einem der vorangehenden Ansprüche, **dadurch gekennzeichnet, dass** die Verarbeitung, die vom zweiten Verarbeitungsschritt (22) der Bildung cartesianischer Bahnen mit mehreren Empfängern umgesetzt wird, weiterhin ein Zwischenmodul (69) aufweist, das überprüft, ob die vom Filtermodul (65) aktualisierten cartesianischen Bahnen einen offensichtlichen Divergenzcharakter aufweisen, für den die kinematischen Daten im cartesianischen Raum, die aus der betrachteten cartesianischen Bahn extrahiert wurden, nicht dem betrachteten Zieltyp entsprechen.

14. Verfahren nach einem der Ansprüche 3 oder 6, **dadurch gekennzeichnet, dass** die Testmodule (43, 64) der Divergenz der aufrechterhaltenen cartesianischen Bahnen den Test einer bestimmten cartesianischen Bahn durchführen, wenn die Kovarianzmatrix $S_{k+1|k}$ des Prognosezustands der betrachteten Bahn die folgenden Schwellenbedingung erfüllt:

$$\det(S_{k+1|k}) \geq \text{MaxDet}$$
wobei MaxDet eine bestimmte Schwelle darstellt.

15. Verfahren nach einem der Ansprüche 5 bis 14, **dadurch gekennzeichnet, dass** der zweite Verarbeitungsschritt (22) ein komplementäres Modul (612) aufweist, das vor der Zuordnung der gebildeten cartesianischen Bahnen mit einem Empfänger zu vorhandenen cartesianischen Bahnen mit mehreren Empfängern die Voraktualisierung durchführt, die mit Hilfe der Plots durchgeführt wird, die das laufende Raster bistatischer Plots mit mehreren Empfängern k bilden, wobei dieses Modul darin besteht, für jede cartesianische Bahn mit mehreren Empfängern die cartesianischen Bahnen mit einem Empfänger zu berücksichtigen, die ihr zuvor für das vorangehende Plotraster mit mehreren Empfängern k-1 zugeordnet waren und der Schätzung (614) der betrachteten cartesianischen Bahn mit mehreren Empfängern die bistatischen Plots zuzuordnen, die mit diesen cartesianischen Bahnen mit einem Empfänger (49) verbunden sind.

16. Verfahren nach einem der vorangehenden Ansprüche, **dadurch gekennzeichnet, dass** es einen vorbereitenden Verarbeitungsschritt (23) aufweist, der darin besteht, eine bistatische Bahnung der bistatischen Plots durchzuführen, die von den verschiedenen Empfängern produziert wurden, die das multistatische Radarsystem bilden, und jedem der Plots, die ein Raster bistatischer Plots k bilden, eine binären Indikator zuzuweisen, der angibt, ob der betrachtete Plot einer bistatischen Bahn zugeordnet ist oder nicht.

17. Verfahren nach einem der Ansprüche 2 bis 16, **dadurch gekennzeichnet, dass** das Initialisierungsmodul cartesianischer Bahnen mit einem Empfänger (47) neue cartesianische Bahnen aus bistatischen Plots (32) initialisiert, die während des vorbereitenden Verarbeitungsschritts (23) zur Bildung bistatischer Bahnen verwendet wurden.

18. Verfahren nach einem der Ansprüche 5 bis 16, **dadurch gekennzeichnet, dass** das Initialisierungsmodul cartesianischer Bahnen mit mehreren Empfängern (68) neue cartesianische Bahnen aus bistatischen Plots (411) initialisiert, die während des vorbereitenden Verarbeitungsschritts (23) zur Bildung bistatischer Bahnen verwendet wurden.

19. Verfahren nach einem der Ansprüche 2 bis 18, **dadurch gekennzeichnet, dass** das Zuordnungsmodul bistatischer Plots zu cartesianischen Bahnen (42) des ersten Verarbeitungsschritts (21) eine Zuordnungsschwelle $\gamma$ verwendet,

die sich danach ändert, ob der betrachtete Plot einer bistatischen Bahn zugeordnet ist oder nicht.

**20.** Verfahren nach einem der Ansprüche 5 bis 19, **dadurch gekennzeichnet, dass** das Zuordnungsmodul bistatischer Plots zu cartesianischer Bahnen (63) des zweiten Verarbeitungsschritts (22) eine Zuordnungsschwelle $\gamma$ verwendet, die sich danach ändert, ob der betrachtete Plot einer bistatischen Bahn zugeordnet ist oder nicht.

**21.** Verfahren nach einem der vorangehenden Ansprüche, **dadurch gekennzeichnet, dass** es eine vorbereitende Verarbeitung umsetzt, um für jeden Plot die Sender zu identifizieren, von denen er offensichtlich nicht ausgegangen sein kann.

**Claims**

**1.** A data processing method for a multi-static radar system comprising a plurality of transmitters and receivers, each receiver being designed to be associated with one or more transmitters so as to form one or more bistatic bases, each receiver producing, at successive times, successive frames of bistatic blips, said method developing and maintaining multi-receiver Cartesian tracks from bistatic blips developed by the various receivers, **characterised in that** it comprises:

- a first processing step (21) during which it develops and maintains mono-receiver Cartesian tracks, each mono-receiver Cartesian track being constituted from blips formed by a given receiver of said multi-static radar system;
- a second processing step (22) during which it develops and maintains multi-receiver Cartesian tracks, each multi-receiver Cartesian track being derived from the merging of mono-receiver Cartesian tracks and being constituted from bistatic blips constituting the mono-receiver Cartesian tracks merged with bistatic blips not having been used during said first processing step (21) so as to constitute a mono-receiver Cartesian track;

the mono-receiver and multi-receiver Cartesian tracks thus developed being updated as and when the frames of blips are produced by the various receivers; the developed tracks, **characterised by** a state vector, a covariance matrix associated with said vector and the lists of bistatic blips that contributed to their formation and to their maintenance, being transmitted to processing means operating downstream of said method.

**2.** The method according to claim 1, **characterised in that** said first processing step (21) processes the bistatic blips produced by each receiver and applies to said blips mono-receiver tracking (27) implementing the following processing modules:

- a prediction module (41) that determines the predicted state of the mono-receiver Cartesian track considered at the time corresponding to the available frame k of bistatic blips, said predicted state being defined by a state vector $\vec{x}_{k|k-1}$ and a covariance matrix $S_{k|k-1}$ associated with said vector;
- an association module (42) identifying the blips of a given frame of bistatic blips k that can be associated with a given mono-receiver Cartesian track, taking into account its predicted state $\vec{x}_{k|k-1}$, and be used to update the state of the considered mono-receiver Cartesian track;
- a module (43) for testing the divergence of the maintained mono-receiver Cartesian tracks, the divergence of a Cartesian track characterising the likelihood of said track relative to the kinematic characteristics of the detected targets;
- a filtering module (44) carrying out, for each existing mono-receiver Cartesian track and for a given frame of bistatic blips k, the estimate $\vec{x}_{k|k}$ of the real state vector of each track, said estimate being carried out on the basis of the predicted state vector of the track $\vec{x}_{k|k-1}$ and the bistatic blips of the frame k associated therewith;
- a module (47) for initialising mono-receiver Cartesian tracks, said initialisation being carried out by the association of bistatic blips (32, 33) that have not been associated with an existing mono-receiver Cartesian track;
- a module (45) for merging Cartesian tracks developing, for the considered receiver, a single mono-receiver Cartesian track on the basis of existing mono-receiver Cartesian tracks exhibiting similarities;
- a control module (46) confirming, for each mono-receiver Cartesian track, the likelihood of the estimate of the estimated state vector $\vec{x}_{k|k}$ characterising the considered mono-receiver Cartesian track;

the state $\vec{x}_{k|k}$, estimated for each mono-receiver Cartesian track, being used by said prediction module to construct the predicted state vector, $\vec{x}_{k+1|k}$, of the track designed to be associated with the bistatic blips constituting the next frame of bistatic blips k+1.

3. The method according to claim 2, **characterised in that** said module (43) for testing the divergence of the maintained mono-receiver Cartesian tracks of said first processing step (21) implements processing that considers a maximum number N of tests that can be carried out for the same given frame n and a maximum number P of frames separating two consecutive tests of the same Cartesian track, and which carries out the test on a new Cartesian track formed for a given frame n as soon as possible after the appearance of the frame n+P.

4. The method according to claim 2 or 3, **characterised in that** said module (45) for merging Cartesian tracks of said first processing step (21) implements Cartesian track merging processing that considers the Cartesian tracks pairwise, said processing including two phases:

   - a first phase that consists in determining whether the considered Cartesian tracks exhibit strong similarities;
   - a second phase that consists in attempting to merge the relevant Cartesian tracks if they are considered to be similar.

5. The method according to any one of the preceding claims, **characterised in that**, with said second processing step (22) simultaneously processing all of the bistatic blips produced by the various receivers constituting said multi-static radar system, with said blips constituting a frame of multi-receiver bistatic blips k, said step implements the following processing modules:

   - a prediction module (61) that determines the predicted state of the multi-receiver Cartesian track considered at the time corresponding to the frame of available blips k, the predicted state being defined by a state vector $\vec{x}_{k|k-1}$ and a covariance matrix $S_{k|k-1}$ associated with said vector;
   - a first association module (62) identifying the mono-receiver Cartesian tracks that can be associated, for a given frame of bistatic blips k, with a given mono-receiver Cartesian track, taking into account the predicted state $\vec{x}_{k|k-1}$, the bistatic blips associated with these mono-receiver Cartesian tracks can be used to update the state of the considered multi-receiver Cartesian track;
   - a second association module (63) identifying the bistatic blips of a given frame of bistatic blips k that have not been associated with mono-receiver Cartesian tracks during said first processing step (21) and which can be associated with a given multi-receiver Cartesian track, taking into account its predicted state $\vec{x}_{k|k-1}$, and can be used to update the state of the considered track;
   - a module (64) for testing the divergence of the maintained multi-receiver Cartesian tracks, the divergence of a track characterising the likelihood of said track relative to the kinematic characteristics of the detected targets;
   - a filtering module (65) carrying out, for each existing multi-receiver Cartesian track and for a given frame of multi-receiver bistatic blips k, the estimate $\vec{x}_{k|k}$ of the real state vector of each track, said estimate being carried out on the basis of the predicted state vector of the track $\vec{x}_{k|k-1}$ and the bistatic blips of the frame k associated therewith;
   - a module (68) for initialising multi-receiver Cartesian tracks, said initialisation being carried out by the association of bistatic blips (411, 412) that have not been associated with an existing mono-receiver Cartesian track during said first processing step (21) and bistatic blips associated with mono-receiver Cartesian tracks during said first processing step (21), said mono-receiver Cartesian tracks not being associated with any multi-receiver Cartesian track by said first association module (62);
   - a module (66) for merging multi-receiver Cartesian tracks developing a single multi-receiver Cartesian track on the basis of existing multi-receiver Cartesian tracks exhibiting similarities;
   - a control module (67) confirming, for each multi-receiver Cartesian track, the likelihood of the estimate of the estimated state vector $\vec{x}_{k|k}$ characterising said track;

   the state estimated for each track $\vec{x}_{k|k}$ being used by said prediction module (61) to construct the predicted state vector of the track $\vec{x}_{k+1|k}$ that is designed to be associated with the bistatic blips constituting the next frame of multi-receiver bistatic blips k+1.

6. The method according to claim 5, **characterised in that** said module (64) for testing the divergence of the maintained multi-receiver Cartesian tracks of said second processing step (22) implements processing that considers a maximum number N of tests that can be carried out for the same given frame n and a maximum number P of frames separating two consecutive tests of the same Cartesian track, and which carries out the test on a new Cartesian track formed for a given frame n as soon as possible after the appearance of the frame n+P.

7. The method according to claim 5 or 6, **characterised in that** said module (66) for merging Cartesian tracks of said second processing step (22) implements Cartesian track merging processing that is identical to that implemented by said module (45) for merging Cartesian tracks of said first processing step (21).

8. The method according to claim 4 or 7, **characterised in that** said first phase for Cartesian track merging processing comprises:

- a first step (51) for determining whether certain Cartesian tracks appear sufficiently close;
- a second step (52) for determining, for two given Cartesian tracks A and B, whether the state vector and the covariance matrix of the Cartesian track A are compatible with the measurements relating to the Cartesian track B;
- a third step (53) for determining, for the same two Cartesian tracks A and B, whether the state vector and the covariance matrix of the Cartesian track B are compatible with the measurements relating to the Cartesian track A;

the Cartesian tracks A and B forming a merged Cartesian track if the set of tests carried out during the three tests (51, 52, 53) is positive.

9. The method according to claim 8, **characterised in that** said second step (52) of said first phase of Cartesian track merging processing comprises:

- a first operation (521) consisting in projecting the state vector and the covariance matrix of a first Cartesian track A into the various bistatic references of a second Cartesian track B;
- a second operation (522) consisting in verifying that the state vector of the Cartesian track A projected into the various bistatic references of the Cartesian track B is compatible with the observation associated with the track B for the considered frame of blips k; the verification being carried out by taking into account the noise that can affect the measurements;

said third step (53) of said first phase of Cartesian track merging processing reproducing processing that is identical to that of said second step (52) of said first phase whilst reversing the roles played by the Cartesian tracks A and B.

10. The method according to claim 9, **characterised in that** said second operation (522) of said second step (52) of said first phase of Cartesian track merging processing carries out, for the Cartesian track A and for each bistatic base used to update the state of the Cartesian track B, the following verifications:

- the bistatic distance deviation between the observation attached to the Cartesian track B and the projection of the state of the Cartesian track A into the considered base is lower than a first given value;
- the bistatic speed deviation between the observation attached to the Cartesian track B and the projection of the state of the Cartesian track A into the considered base is lower than that of a second given value;
- the azimuth deviation between the observation attached to the Cartesian track B and the projection of the state of the Cartesian track B into the considered base is lower than a given third value;

said second operation (532) of said third step (53) of said first phase for Cartesian track merging processing carrying out, for the Cartesian track B and for each bistatic base used to update the state of the Cartesian track A, the same verifications as said second operation (522) of said second step (52) of said first phase for Cartesian track processing merging.

11. The method according to any one of claims 8 to 10, **characterised in that** the Cartesian track merging processing implements additional operations (541, 542, 543) allowing the age of the considered Cartesian tracks A and B to be taken into account and the age of said tracks to be compared with a minimum age, and according to the results of the comparisons:

- neither said second step (52) nor said third step (53) of said first phase of said module for merging Cartesian tracks (45) to be carried out;
- only said second step (52) to be carried out;
- only said third step (53) to be carried out;
- said second step (52) and said third step (53) to be carried out.

12. The method according to any one of the preceding claims, **characterised in that** said processing (27) implemented by said first processing step (21) for forming mono-receiver Cartesian tracks further comprises an intermediate module (48) that verifies whether the Cartesian tracks updated by said filtering module (44) exhibit a manifest divergence character for which the kinematic data in the Cartesian space extracted from the considered Cartesian track does not correspond to the type of target considered.

13. The method according to any one of the preceding claims, **characterised in that** said processing implemented by said second processing step (22) for forming multi-receiver Cartesian tracks further comprises an intermediate module (69) that verifies whether the Cartesian tracks updated by said filtering module (65) exhibit a manifest divergence character for which the kinematic data in the Cartesian space extracted from the considered Cartesian track does not correspond to the type of target considered.

14. The method according to claim 3 or 6, **characterised in that** said modules (43, 64) for testing the divergence of the maintained Cartesian tracks tests a given Cartesian track  if the covariance matrix $S_{k+1|k}$ of the predicted state of the considered track fulfils the following threshold condition:

$$\det\left(S_{k+1|\,k}\right) \geq \text{MaxDet}$$

in which MaxDet represents a given threshold.

15. The method according to any one of claims 5 to 14, **characterised in that** said second processing step (22) comprises an additional module (612) that carries out, before the association of the formed mono-receiver Cartesian tracks with the existing multi-receiver Cartesian tracks, a pre-updating operation carried out by means of blips forming the current frame of multi-receiver bistatic blips k, said module consisting in considering, for each multi-receiver Cartesian track, the mono-receiver Cartesian tracks previously associated therewith for the preceding frame of multi-receiver blips k-1 and in associating said estimate (614) of the considered multi-receiver Cartesian track with the bistatic blips attached to said mono-receiver Cartesian tracks (49).

16. The method according to any one of the preceding claims, **characterised in that** it comprises a step of preliminary processing (23) consisting in carrying out bistatic tracking of bistatic blips produced by the various receivers constituting said multi-static radar system and in assigning, to each of the blips constituting a frame of bistatic blips k, a binary indicator indicating whether or not the considered blip is associated with a bistatic track.

17. The method according to any one of claims 2 to 16, **characterised in that** said module (47) for initialising mono-receiver Cartesian tracks initialises new Cartesian tracks on the basis of bistatic blips (32) that have been used to form bistatic tracks during said preliminary processing step (23).

18. The method according to any one of claims 5 to 16, **characterised in that** said module (68) for initialising multi-receiver Cartesian tracks initialises new Cartesian tracks on the basis of bistatic blips (411) that have been used to form bistatic tracks during said preliminary processing step (23).

19. The method according to any one of claims 2 to 18, **characterised in that** said module (42) for associating bistatic blips with Cartesian tracks of said first processing step (21) uses an association threshold $\gamma$ that differs depending on whether or not the considered blip is associated with a bistatic track.

20. The method according to any one of claims 5 to 19, **characterised in that** said module (63) for associating bistatic blips with Cartesian tracks of said second processing step (22) uses an association threshold Y that differs depending on whether or not the considered blip is associated with a bistatic track.

21. The method according to any one of the preceding claims, **characterised in that** it implements preliminary processing for identifying, for each blip, the transmitters that it manifestly cannot be derived from.

Fig. 1

24

24

plots détectés
par Rx 1

plots détectés
par Rx N

23

**Filtrage des
faux plots**

**Filtrage des
faux plots**

Plots non
associés

Plots
associés

21

Plots non
associés

Plots
associés

**Pistage mono-
récepteur**

**Pistage mono-
récepteur**

Pistes
cartésiennes
élémentaires

Plots
associés
libres

26

Pistes
cartésiennes
élémentaires

Plots
associés
libres

Plots non
associés
libres

Plots non
associés
libres

**Pistage multi-récepteurs**

22

Pistes
cartésiennes
globales

25

# Fig. 2

31

24

23

Intervalle de temps
entre plots
successifs

Plots détectés

Association
plots - pistes
bistatiques

Plots non
associés

Etats prédits
des Pistes
bistatiques

Pistes bistatiques
mises à jour

Initialisation
des pistes
élémentaires

Actualisation
du modèle de
cible

Filtrage de
Kalman

Nouvelles
Pistes

Pistes
bistatiques
estimées

⊕

Plots non pistés

Elimination des pistes
non entretenues

Plots pistés

Marquage des
plots

Intervalle de temps
entre plots
successifs

Plots bistatiques
pistés

Plots bistatiques
non pistés

31

32

33

# Fig. 3

**Intervalle de temps** — 31

**Plots bistatiques pistés** — 32

**Plots bistatiques non pistés** — 33

41

**Prédiction à partir du modèle de cible choisi**

Pistes mono-Rx prédites

**Association des pistes cartésiennes mono-Rx aux plots associés et non associés** — 42

Pistes mono-Rx prédites et plots associés

**Test sur les distances bistatiques des plots associés**

43

**Filtrage de Kalman étendu** — 44

Pistes mono-Rx estimées courantes

Plots pistés libres

**Initialisation des pistes cartésiennes mono-récepteur** — 47

**Test de l'estimation fournie**

48

⊕ ← Nouvelles Pistes mono-Rx

Plots non pistés libres

Plots pistés libres

**Fusion des pistes cartésiennes mono-Rx semblables** — 45

**Test sur la vraisemblance des pistes mono-Rx formées** — 46

27

**Pistes cartésiennes mono-Rx** — 49

**Plots pistés libres** — 411

**Plots non pistés libres** — 412

# Fig. 4

Fig. 5

31

49

411

412

Intervalle de temps

Pistes cartésiennes mono-Rx

Plots bistatiques pistés

Plots bistatiques non pistés

612

63

Actualisation des pistes cartésiennes mono-récepteur associées

Association plots libres - pistes cartésiennes multi-récepteurs

614

Pistes multi-Rx prédites et pistes mono-Rx associées

Pistes multi-Rx prédites et pistes mono-Rx et plots

64

Pistes multi-Rx mises à jour

Pistes mono-Rx non associées

615

62

Association pistes mono-récepteur - pistes multi-récepteurs

Test sur les distances bistatiques des plots associés

Pistes multi-Rx prédites

Plots bistatiques pistés non associées

Filtrage de Kalman étendu

Pistes mono-Rx non associées

61

65

Prédiction à partir du modèle de cible choisi

Pistes multi-Rx estimées

68

Initialisation de pistes cartésiennes multi-récepteurs

Test de l'estimation fournie

69

Pistes multi-Rx estimées

Nouvelle Pistes multi-Rx estimées

613

⊕

Fusion des pistes cartésiennes multi-récepteurs semblables

66

Test sur la vraisemblance des pistes multi-récepteurs formées

67

28

611

Pistes cartésiennes multi-récepteur

Fig. 6